(19) Europäisches Patentamt
European Patent Office
Office européen des brevets

(11) **EP 4 109 606 A1**

(12) **EUROPEAN PATENT APPLICATION**

(43) Date of publication:
**28.12.2022 Bulletin 2022/52**

(21) Application number: **22168711.4**

(22) Date of filing: **19.04.2022**

(51) International Patent Classification (IPC):
**H01M 8/04089** (2016.01)

(52) Cooperative Patent Classification (CPC):
**H01M 8/04097**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.06.2021 US 202163215089 P**

(71) Applicants:
• **Cummins Inc.
Columbus, IN 47202 (US)**

• **Hydrogenics Corporation
Mississauga, ON L5T 2N6 (CA)**

(72) Inventors:
• **Ancimer, Richard
Toronto, M6S 3R7 (CA)**
• **Teene, Eero
Hamilton, L9C 3Y6 (CA)**
• **Forte, Paolo
Maple, L6A 2S9 (CA)**

(74) Representative: **Dauncey, Mark Peter
Marks & Clerk LLP
1 New York Street
Manchester M1 4HD (GB)**

(54) **MULTI-EJECTOR CONFIGURATIONS**

(57) The present disclosure generally relates to systems and methods comprising more than one venturi or ejector with a fuel cell or fuel cell stack.

FIG. 1

EP 4 109 606 A1

**Description**

CROSS-REFERENCE TO RELATED APPLICATIONS

This nonprovisional application claims the benefit and priority, under 35 U.S.C. § 119(e) and any other applicable laws or statutes, to U.S. Provisional Patent Application Serial No. 63/215,089 filed on June 25, 2021, the entire disclosure of which is hereby expressly incorporated herein by reference.

TECHNICAL FIELD

The present disclosure relates to systems and methods of operating a system comprising more than one venturi or ejector and a fuel cell or fuel cell stack.

BACKGROUND

Vehicles and/or powertrains use fuel cells or fuel cell stacks for their power needs. The fuel cell or fuel cell stacks may be any type of fuel cell. For example, the fuel cell and/or fuel cell stack may include, but are not limited to, a phosphoric acid fuel cell (PAFC), a molten carbonate fuel cell (MCFC), a proton exchange membrane fuel cell, also called a polymer exchange membrane fuel cell (PEMFC), and a solid oxide fuel cell (SOFC).

A fuel cell or fuel cell stack may generate electricity in the form of direct current (DC) from electro-chemical reactions that take place in the fuel cell or fuel cell stack. A fuel processor converts fuel into a form usable by the fuel cell or fuel cell stack. If the fuel cell or fuel cell stack is powered by a hydrogenrich, conventional fuel, such as methanol, gasoline, diesel, or gasified coal, a reformer may convert hydrocarbons into a gas mixture of hydrogen and carbon compounds, or reformate. The reformate may then be converted to carbon dioxide, purified and recirculated back into the fuel cell or fuel cell stack.

Fuel, such as hydrogen or a hydrocarbon, is channeled through field flow plates to the anode on one side of the fuel cell or fuel cell stack, while oxygen from the air is channeled to the cathode on the other side of the fuel cell or fuel cell stack. At the anode, a catalyst, such as a platinum catalyst, causes the hydrogen to split into positive hydrogen ions (protons) and negatively charged electrons. In the case of a polymer exchange membrane fuel cell (PEMFC), the polymer electrolyte membrane (PEM) permits the positively charged ions to flow through the PEM to the cathode. The negatively charged electrons are directed along an external loop to the cathode, creating an electrical circuit (electrical current). At the cathode, the electrons and positively charged hydrogen ions combine with oxygen to form water, which flows out of the fuel cell or fuel cell stack.

Fuel stream is exhausted from a fuel cell or fuel cell stack outlet and recirculated back to the anode through an anode inlet. The recirculation of the fuel stream exhaust back to the anode inlet includes both fuel and water. The recirculation rate is based on specified excess fuel targets such as excess fuel ratio or entrainment ratio (ER). The entrainment ratio (ER) is defined as the ratio of mass flow rate of the low pressure stream (e.g., the secondary mass flow rate) to the mass flow rate of the high pressure stream (e.g., the primary mass flow rate).

Fuel targets for a system may be specified as a minimum level of excess fuel required by the fuel cell or fuel cell stack based on the operating conditions of the fuel cell or fuel cell stack. A fuel cell or fuel cell stack may have an excess fuel level higher than the minimum level defined by the excess fuel target, but achieving that higher level may result in a high parasitic load on the fuel cell or fuel cell stack. For example, an excess fuel level higher than the minimum excess fuel level may be achieved by maintaining high fuel flow rates at the anode which may lead to pressure loss in the fuel cell or fuel cell stack. A blower and/or pump may function at a capacity proportional to the pressure loss in the fuel cell or fuel cell stack and/or to the volumetric flow rate through the blower and/or pump. A blower and/or pump may use additional power to compensate for the pressure loss. Use of additional power by the blower and/or pump may result in a high parasitic load on the fuel cell or fuel cell stack. Different system configurations may be implemented such that the system may deliver the required entrainment ratio and/or power with minimum parasitic load.

The present disclosure relates to systems and methods of operating a system comprising more than one venturi or ejector and a fuel cell or fuel cell stack. The present disclosure also relates to determining a division of labor between more than one venturi or ejectors in a series or in a parallel configuration.

SUMMARY OF THE INVENTION

Embodiments of the present invention are included to meet these and other needs. In one aspect, described herein is a fuel cell or fuel stack system comprising an operating current density range comprising a lowest operating current density and a highest operating current density, a control valve, a first ejector comprising a first primary fuel, a first entrained fuel, a first maximum current density, a first minimum current density, and a first turn down ratio, and a second ejector comprising a second primary fuel, a second entrained fuel, a second maximum current density, a second minimum current density, and a second turn down ratio.

In one embodiment, the system further comprises a blower in a series or parallel configuration to the first or the second ejector. In some embodiments, the first ejector is in parallel or in series to the second ejector. In one embodiment, the first turn down ratio is from about 1.5 to about 8, or the second turn down ratio is in a range from about 1.5 to about 8, and the first turn down ratio is the same as the second turn down ratio. In some embodiments, the first turn down ratio is different from the second turn down ratio.

In one embodiment, the first primary fuel flows through a first primary nozzle in the first ejector and the second primary fuel flows through a second primary nozzle in the second ejector, the first turn down ratio is 2 and the second turn down ratio is 2, and the ratio of the first primary nozzle to the second primary nozzle is 2:1.

In one embodiment, the first ejector is sized to provide an entrainment ratio at the lowest operating current density of the system up to a first current density and the second ejector is sized to provide the entrainment ratio above the first current density and up to the highest operating current density.

In one embodiment, the system further comprises a by-pass valve downstream of the control valve and the by-pass valve accounts for an entrainment ratio above a by-pass valve current density and up to the highest operating current density. In some embodiments, the first ejector is sized to provide the entrainment ratio at the lowest operating current density of the system up to a first current density, and the second ejector is sized to provide the entrainment ratio above the first current density and up to the by-pass valve current density.

In one embodiment, the first primary fuel flows through a first primary nozzle in the first ejector and the second primary fuel flows through a second primary nozzle in the second ejector, the first turn down ratio is 2 and the second turn down ratio is 2, and the ratio of the first primary nozzle to the second primary nozzle is 2:1. In some embodiments, the first ejector and the second ejector together account for the entrainment ratio up to the by-pass valve current density.

In one embodiment, the mixer area ratio of the first ejector is different from the mixer area ratio of the second ejector. In some embodiment, the first ejector and the second ejector are sized based on a minimum fuel supply pressure for both the first ejector and the second ejector or the turn down ratio of the first ejector and the second ejector.

In one embodiment, the first ejector or the second ejector are sized to operate at the lowest operating current of the system. In some embodiments, the system operates only the first ejector if the first maximum current density of the first ejector is greater than a maximum operating current density of the system, and the first mixer area ratio of the first ejector is sized to not geometrically constrain the required entrainment ratio.

In one embodiment, the system operates the first ejector or the second ejector if the first maximum current density of the first ejector is lower than a maximum operating current density of the system. In some embodiments, the system operates the second ejector if current demand is equal to or more than the second minimum current density. In other embodiments, the system operates the second ejector before current demand is equal to the first maximum current density of the first ejector. In some other embodiments, the system operates the first ejector and the second ejector before current demand is equal to the second maximum current density of the first ejector. In other embodiments, the system does not operate both the first ejector and the second ejector before current demand is equal to the sum of the first minimum current density of the first ejector and the second minimum current density of the second ejector.

In another aspect, described herein is a method of operating a fuel cell or fuel stack system comprising flowing a first primary fuel through a control valve and a first ejector, flowing a first entrained fuel through the ejector, flowing a second primary fuel through the control valve and a second ejector, flowing a second entrained fuel through the ejector, and operating the first or the second ejectors. The first ejector comprises a first maximum current density, a first turn down ratio, a first mixer area ratio, and a first minimum current density, and the second ejector comprises a second maximum current density, a second turn down ratio, a second mixer area ratio, and a second minimum current density. The system comprises an operating current density range comprising a lowest operating current density and a highest operating current density.

BRIEF DESCRIPTION OF THE DRAWINGS

These and other features, aspects, and advantages of the present invention will become better understood when the following detailed description is read with reference to the accompanying drawings, in which like characters represent like parts throughout the drawings, wherein:

FIG. 1 is a graph showing the operating curves of a system comprising a fuel cell or fuel cell stack.

FIG. 2 is a schematic showing a mechanical regulator used along with a venturi or ejector in a fuel cell stack system.

FIG. 3 is a schematic showing a proportional control valve used along with a venturi or ejector in a fuel cell stack system.

FIG. 4A is a schematic showing a small venturi or ejector in a parallel configuration with a recirculation pump or a blower.

FIG. 4B is a graph showing the operating curves of a system comprising a small venturi or ejector in a parallel configuration with a recirculation pump or a blower.

FIG. 5A is a schematic of one embodiment of a system comprising multiple venturi or ejector in a parallel configuration.

FIG. 5B is a schematic of a second embodiment of a system comprising multiple venturi or ejector in a parallel configuration.

FIG. 6A is a schematic of one embodiment of a system comprising multiple venturi or ejector in a series configuration.

FIG. 6B is a schematic of a second embodiment of a system comprising multiple venturi or ejector in a series configuration.

FIG. 7A is a graph showing the division of labor between multiple ejectors when the fuel supply pressure is about 30 bara.

FIG. 7B is a graph showing the division of labor between multiple ejectors when the fuel supply pressure is about 20 bara.

FIG. 7C is a graph showing the division of labor between multiple ejectors when the fuel supply pressure is about 14 bara.

DETAILED DESCRIPTION

The present disclosure relates to systems and methods of operating a system comprising more than one venturi or ejector in a series or in a parallel configuration. The present disclosure relates to using and sizing the more than the more than one venturi or ejectors comprised in a fuel cell system. The present disclosure also relates to determining and/or implementing a division of labor between more than the more than one venturi or ejectors.

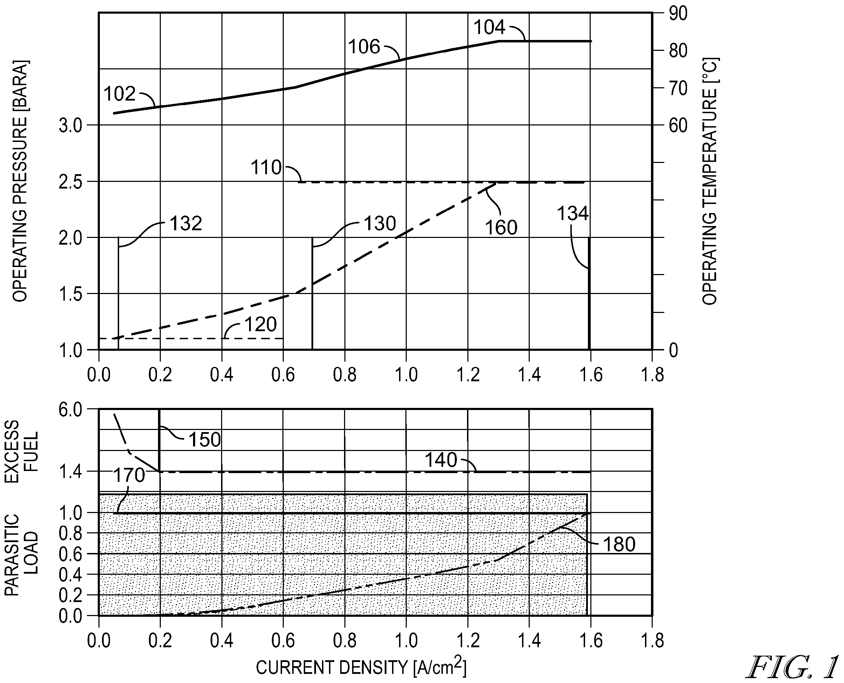

One embodiment of the requirements of the present operating system comprising a fuel cell or fuel cell stack is shown in FIG. 1. The operating pressures and the associated operating temperatures are shown as a function of current density. A fuel cell or fuel cell stack may be required to operate within a pressure range known as anode inlet manifold pressure ($P_{AIM}$).

The highest anode inlet manifold pressure of a fuel cell or fuel cell stack ($P_{AIM\_HI}$) is denoted by **110.** The lowest anode inlet manifold pressure of a fuel cell or fuel cell stack ($P_{AIM\_LO}$) is denoted by **120.** The range **160** between **110** and **120** indicates the target anode inlet manifold pressure range. In some embodiments, the target temperature of the system may range from a low fuel supply operating temperature ($T_{CV\_LO}$) **102** to a high fuel supply operating temperature ($T_{CV\_HI}$) **104.**

In one embodiment, it is critical to operate the fuel cell or fuel cell stack at a pressure that ranges from about or approximately the highest anode inlet manifold pressure ($P_{AIM\_HI}$) **110** to about or approximately the lowest anode inlet manifold pressure ($P_{AIM\_LO}$) **120** when the fuel cell or fuel cell stack is operating above a critical current density ($i_{\_LO\_CR}$) **130.** In some embodiments, the critical current density ($i_{\_LO\_CR}$) **130** may be at about 0.7 A/cm$^2$. In other embodiments, the critical current density ($i_{\_LO\_CR}$) **130** may be at about 0.6 A/cm$^2$. In some further embodiments, the critical current density ($i_{\_LO\_CR}$) **130** may be higher or lower than 0.7 A/cm$^2$, such as ranging from about 0.5 A/cm$^2$ to about 0.9 A/cm$^2$, including every current density comprised therein.

In one embodiment, the fuel cell or fuel cell stack may be operating at high current density range such as from about 1.3 A/cm$^2$ to about 2.0 A/cm$^2$, or about 1.3 A/cm$^2$ to about 1.6 A/cm$^2$, or about 1.0 A/cm$^2$ to about 1.6 A/cm$^2$. In some embodiments, operating the fuel cell or fuel cell stack at high current densities (e.g., at about 1.6 A/cm$^2$) with pressures and temperatures different from the optimal target operating pressure and temperature may lower the efficiency of the fuel cell or fuel cell stack. Doing so may also result in damage to the fuel cell or fuel cell stack because of MEA degradation (e.g., due to starvation, flooding and/or relative humidity effects). In some embodiments, there may be more flexibility in the fuel cell or fuel cell stack operating pressure and temperature when the fuel cell or fuel cell stack is operating below the critical current density ($i_{\_LO\_CR}$) **130.** The present operating system comprising the fuel cell or fuel cell stack can operate at a minimum current density ($i_{MIN}$) **132** and a maximum current density ($i_{MAX}$) **134.**

In one embodiment, the present system comprising a fuel cell or fuel cell stack may operate in a functional range that may be different than that indicated by the curve **160** in **FIG. 1.** In some embodiments, the operating system may function at higher pressures (e.g., highest anode inlet manifold pressure ($P_{AIM\_HI}$) **110)** or at a current density as low as the critical current density ($i_{LO\_CR}$) **130.** For example, the present system might extend steady state operation at about 2.5 bara all the way down to the critical current density ($i_{LO\_CR}$) **130.** Pressure measurements in bara refer to the absolute pressure in bar.

In one embodiment, excess fuel may be provided at the anode inlet to avoid fuel starvation towards the anode outlet. The water content of the anode inlet stream or the relative humidity of the inlet stream may impact the performance and health of the fuel cell. For example, low inlet humidity may lead to a drier membrane electrode assembly (MEA), resulting in reduced performance. Low inlet humidity may also induce stresses that can lead to permanent damage to the membrane electrode assembly (MEA). High humidity levels may lead to flooding within the fuel cells, which can induce local starvation and/or other effects that may reduce fuel cell performance and/or damage the membrane electrode assembly (MEA). In some embodiments, there may be an optimal inlet relative humidity range in which fuel cell performance is improved and membrane electrode assembly (MEA) degradation rate is minimized. For example, the fuel cell can achieve optimal performance when the anode inlet gas relative humidity levels is in the range of about 30% to about 35%.

In one embodiment, under normal operating conditions, the source of the excess fuel and water content in a fuel cell may be from recirculated anode gas. The composition of recirculated flow in the operating system is dependent on that of anode gas outlet. In some embodiments, the anode outlet gas may be saturated with water at a given anode gas outlet temperature and pressure. Thus, the composition of the recirculated flow may vary and should be taken into account when determining the required recirculation flow to meet the inlet anode gas excess fuel or relative humidity targets.

The required level of recirculation flow rate can be set by either the need for excess fuel, or for increased water content, whichever calls for higher recirculation flow. The required recirculation flow can be expressed as the target entrainment ratio (ER). Alternatively, a target effective excess fuel ratio or a minimum required fuel ratio may account for either the need for excess fuel, or the inlet anode water content. 'Excess fuel ratio' may be used to represent the required composition derived from the recirculation flow to meet the anode inlet gas requirement. The anode gas requirement may be the more stringent of excess fuel ratio or relative humidity requirements of the fuel cell system.

The minimum required excess fuel ratio as a function of current density is indicated by the line **140.** Excess fuel ratio ($\lambda$) or the anode stoichiometry ratio is defined as the ratio of anode inlet fuel flow rate to the fuel consumed in the fuel cell or fuel cell stack. In some embodiments, the system requires a fuel amount at or above the minimum required fuel ratio level. In other embodiments, the operating system may requier a target water or humidity level, which may affect the excess fuel ratio ($\lambda$). The excess fuel ratio ($\lambda$) may be flat across the system operating range except at low current densities, such as a current density at or below an excess fuel ratio current density threshold ($i_{\lambda\_THV}$) **150** or the excess fuel ratio ($\lambda$) may change with a change in the current density. In some embodiments, the excess fuel ratio ($\lambda$) above the excess fuel ratio current density threshold ($i_{\lambda\_THV}$) **150** may be range from about 1.3 to about 1.9, including any ratio comprised therein. In one preferable embodiment, the excess fuel ratio ($\lambda$) above the excess fuel ratio current density threshold ($i_{\lambda\_THV}$) **150** may be about 1.4 or about 1.6.

In some embodiments, the excess fuel ratio current density threshold ($i_{\lambda\_THV}$) **150** of the present system may be at or about 0.2 A/cm$^2$. In other embodiments, the excess fuel ratio current density threshold ($i_{\lambda\_THV}$) **150** may be at a different current density. For example, the excess fuel ratio current density threshold ($i_{\lambda\_THV}$) **150** may range from about 0.05 A/cm$^2$ to about 0.4 A/cm$^2$, including any current density comprised therein. In one preferable embodiment, the excess fuel ratio current density threshold ($i_{\lambda\_THV}$) **150** may be about 0.1 A/cm$^2$ or about 0.2 A/cm$^2$. The excess fuel ratio current density threshold ($i_{\lambda\_THV}$) **150** may depend on the operating conditions of the fuel cell or fuel cell stack.

In one embodiment, if the fuel cell or fuel cell stack is operating below the excess fuel ratio current density threshold ($i_{\lambda\_THV}$) **150,** a minimum volumetric flow rate may be maintained through the anode to ensure that any liquid water that might form in the fuel cell or fuel cell stack may be flushed out of the fuel cell or fuel cell. In some embodiments, at low flow rates (e.g., below about 0.2 A/cm$^2$ or below about 0.1 A/cm$^2$), there may be flooding in the fuel cell. In other embodiments, if the minimum volumetric flow rate is below the excess fuel ratio current density threshold ($i_{\lambda\_THV}$) **150,** the rate of fuel cell or fuel cell stack degradation may increase.

In one embodiment, a venturi or ejector may be used in the present system. The venturi or ejector may be sized, such that the operating system may not require the assistance of a recirculation pump, such as a blower, at certain current densities. Absence of usage of the blower may result in a decrease in parasitic load, as shown by the curves **170** and **180** of **FIG. 1.** The curve **170** shows the fraction of flow that is delivered by the blower and/or recirculation pump without a venturi or ejector. The curve **180** shows the corresponding parasitic load. In some embodiments, the parasitic load may increase with an increase in current density, as shown by the curve **180,** because the blower and/or recirculation pump may function at a capacity proportional to the pressure loss and the required recirculation flow rate in the fuel cell or fuel cell stack.

In some embodiments, a fuel cell or fuel cell stack may be initially operating at high current density, at high operating temperatures and pressures such that the fuel cell load under this initial operating condition is high. The fuel cell load is defined as:

$$\text{Load} = \text{stack power} = \text{current x fuel cell or fuel cell stack voltage} = \text{current}$$

$$\text{density x fuel cell area x fuel cell or fuel cell stack voltage}$$

In some embodiments, the fuel cell or fuel cell stack is in a load shedding state when the load demand for power is rapidly reduced or shed requiring the fuel cell or fuel cell stack to reduce the current delivered.

In one embodiment, during transient operations in a fuel cell or fuel cell stack, the operating pressure in the fuel cell or fuel cell stack may change based on the changes in the fuel cell or fuel cell stack temperature indicated by the curve **106.** For example, during load shedding, the transient operating pressure ($P_{AIM\_TRS}$) may be greater than the steady state operating pressure ($P_{AIM\_SS}$). In some embodiments, the transient operating pressure ($P_{AIM\_TRS}$) may equal the highest anode inlet manifold pressure ($P_{AIM\_HI}$) **110** even at low current densities. During load acceptance, the rate of increase in current density is limited, and the steady state operating pressure ($P_{AIM\_SS}$) may equal the anode inlet manifold pressure ($P_{AIM}$).

In one embodiment, the operating pressure of a fuel cell or fuel cell stack indicated by the curve **160** may optimize the balance between enabling efficient fuel cell or fuel cell stack operation and the parasitic load required to operate at the chosen operating pressure (e.g., the parasitic load of an air compressor, a blower, and/or a pump). In some embodiments, the operating temperature indicated by the curve **106,** operating pressure indicated by the curve **160,** and/or excess air ratio may maintain a target relative humidity (RH) for the fuel cell or fuel cell stack operation. In other embodiments, the operating temperature indicated by the curve **106,** operating pressure indicated by the curve **160,** and/or excess air ratio may be determined by targeting a specific value for the relative humidity (RH) at the cathode.

The excess air ratio is defined similarly to excess fuel ratio, but refers to the cathode side flow (i.e., excess $O_2$ in the air). The combination of excess air ratio, pressure and temperature are used together to control humidity on the cathode side (which in turn impacts water content on the anode ($H_2$) side. In one embodiment, temperature, pressure, and excess air ratio that vary with current density may be used to control humidity. In some embodiments, excess air ratio is about 2.0. In other embodiments, excess air ratio is about 1.7 to about 2.1. In some other embodiments, excess air ratio is about 1.8 to about 1.9 under pressurized operation. Excess air ratio may increase to below a threshold current to keep volumetric flow rate high enough to prevent flooding in the fuel cell or fuel cell stack.

In some embodiments, the target relative humidity (RH) may be maintained by using a humidification device in combination with the operating pressure and operating temperature. For example, a humidification device may be used on the cathode side of a fuel cell or fuel cell stack. In other embodiments, if the target relative humidity (RH) and the target operating pressure for the fuel cell or fuel cell stack are specified, the target temperature for the fuel cell or fuel cell stack operation may be determined.

In one embodiment, a system comprising a fuel cell or fuel cell stack may comprise a control valve. In some embodiments, the control valve may be a mechanical regulator (e.g., a dome regulated mechanical regulator), a proportional control valve, or an injector. In other embodiments, the control valve may comprise an inner valve, coil, a solenoid, or a different mechanical element that controls the opening or closing of the control valve.

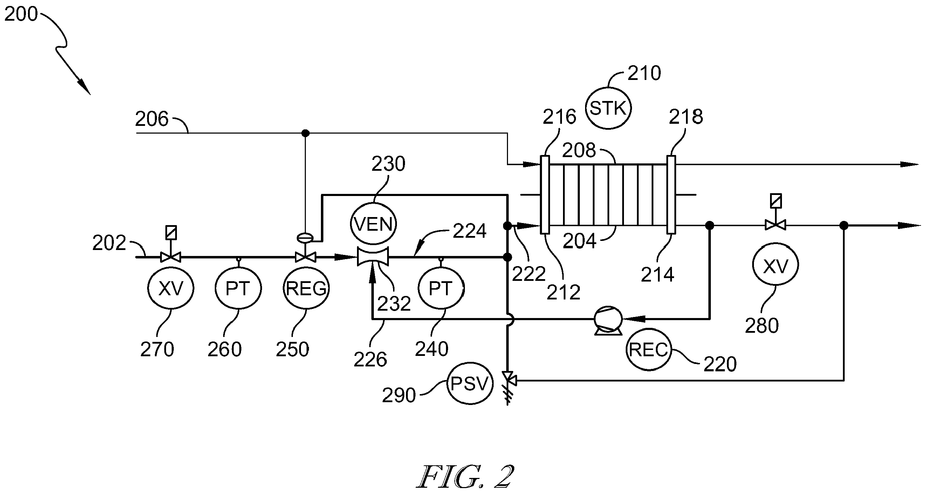

**FIG. 2** illustrates one embodiment of an operating system **200** comprising a fuel cell stack **210,** a mechanical regulator **250,** a recirculation pump or blower **220** in series or in parallel to the fuel cell stack **210,** an exhaust valve **280,** a shut off valve **270,** a pressure transfer valve **290,** one or more pressure transducers **240/260,** and a venturi or ejector **230.** In some embodiments, the present system **200** may comprise one or more fuel cell stacks or one or more fuel cells. In other embodiments, there may also be one or multiple valves, sensors, compressors, regulators, blowers, injectors, ejectors, and/or other devices in series or in parallel with the fuel cell stack **210.**

In one embodiment of the present system **200,** the anode inlet stream **222,** flows through the anode **204** end of the fuel cell stack **210.** Typically, the anode stream may be a mixture of fresh fuel (e.g., $H_2$) and anode exhaust (e.g., $H_2$ fuel and/or water). Conversely, oxidant **206** (e.g., air, oxygen, or humidified air) may flow through the cathode end **208** of the fuel cell stack **210.**

In one embodiment, a mechanical regulator **250** may be used to control the flow of fresh fuel **202** also referred to as primary flow, primary mass flow, primary fuel, or motive flow to the anode **204.** The pressure differential between the gas streams (e.g. fuel **222** and air **206**) at the anode **204** and the cathode **208** may provide an input signal to a controller in the mechanical regulator **250.** The controller of the mechanical regulator **250** may determine the flow of fuel **222** through the anode inlet **212** at the anode **204.**

In some embodiments, the input signal from the anode and/or cathode of the fuel cell or fuel cell stack may be a physical signal. In other embodiments, the input signal may be a virtual or an electronic signal. In yet further embodiments, the signal may be any type of communicative or computer signal known in the art.

In one embodiment, the primary fuel flow rate or primary flow rate may be controlled to match the fuel consumption in the fuel cell stack **210** based on the operating pressure (e.g., anode pressure) being used as an intermediary signal. In some embodiments, the pressure in the anode **204** may stabilize when fuel consumption matches the fresh fuel feed at the anode **204** assuming that all other parameters are equal. Since the functioning of the mechanical regulator **250** is based on the pressure differential between the anode **204** and cathode **208,** a target pressure differential needs to be maintained when using a mechanical regulator **250**. In some embodiments, the pressure at the cathode **208** is controlled and/or maintained at a target level via cathode side controls.

In one embodiment, a mechanically regulated approach, such as by employing actuators, may use the pressure signals from cathode/air inlet **216** to control air mass flow and maintain the appropriate pressure on the cathode **208** side of the fuel cell stack **210**. In some embodiments, pressure signals from cathode **208** side are inputs to the mechanical regulator **250**. In some embodiments, the anode **204** side mass flow and anode **204** side pressure may be controlled by using the pressure signals from cathode **208** side and measuring one or more anode **204** side conditions.

In one embodiment, the pressure signals from cathode **208** side may change the position of a valve in the mechanical regulator **250** to control mass flow through the mechanical regulator **250** and maintain the target pressure differential between the anode **204** and the cathode **208**. In other embodiments, the input signal that acts on the mechanical regulator **250** is effectively a pressure differential that acts on a diaphragm or other parts of the mechanical regulator **250**. No other direct measurement of the pressure differential must be undertaken. For example, the single point pressure at the anode **204** may be calculated to be the cathode **208** side pressure plus the pressure differential between the gas streams at the anode **204** and the cathode **208**. Single point pressure may be absolute pressure or gauge pressure.

In one embodiment, the venturi or ejector **230** may draw a secondary flow **226** also referred to as secondary mass flow, entrainment flow, or recirculation flow, using a flow pressure across the anode gas recirculation (AGR) loop **224**. In some embodiments, as discussed later, the venturi or ejector **230** may take advantage of the available excess exergy from the higher pressure primary flow to draw in the secondary flow **226,** working against the pressure losses through the AGR loop **224**. In some embodiments, the AGR loop **224** may include the venturi or ejector **230,** fuel cell stack **210,** a secondary inlet **232** in a suction chamber in the venturi or ejector **230,** and/or other piping, valves, channels, manifolds associated with the venturi or ejector **230** and/or fuel cell stack **210**. In other embodiments, the recirculation pump or blower **220** may increase or decrease the differential pressure across the AGR loop **224**.

In one embodiment, the system **200** may require a target water or humidity level, which may drive the saturated secondary flow **226**. The saturated secondary flow **226** may then drive the primary flow **202,** such that the target excess fuel ratio (λ) may be dependant on the target water or humidity level.

In one embodiment, the recirculation pump or blower **220** may be used to achieve the excess fuel ratio. In some embodiments, the recirculation pump or blower **220** may operate across the entire operating range (current density) of the fuel cell stack **210**. In other embodiments, the parasitic load of the recirculation pump or blower **220** may be substantial. In one embodiment, a large recirculation pump or blower **220** may be required to provide the power to achieve the excess target fuel ratio. In some embodiments the use of the recirculation pump or blower **220** may be inefficient and expensive. In some embodiments, operating characteristics of a recirculation pump or blower **220** may be distinct from a venturi or ejector **230**.

In one embodiment, the pressure lift capability of the recirculation pump or blower **220** ($\Delta P_{BLWR}$) is function of the flow through the recirculation pump or blower **220** (Q), the blower speed (N), and the density of the flow composition (ρ). In some embodiments, the pressure lift of the recirculation pump or blower **220** ($\Delta P_{BLWR}$) may be limited by power draw limits and/or speed limit of the system **200/300.** In one embodiment, when the recirculation pump or blower **220** is not spinning or under other system **200/300** stall conditions, the recirculation pump or blower **220** may act as a restriction in the AGR loop.

$$\Delta P_{BLWR} = f(Q, N, \rho)$$

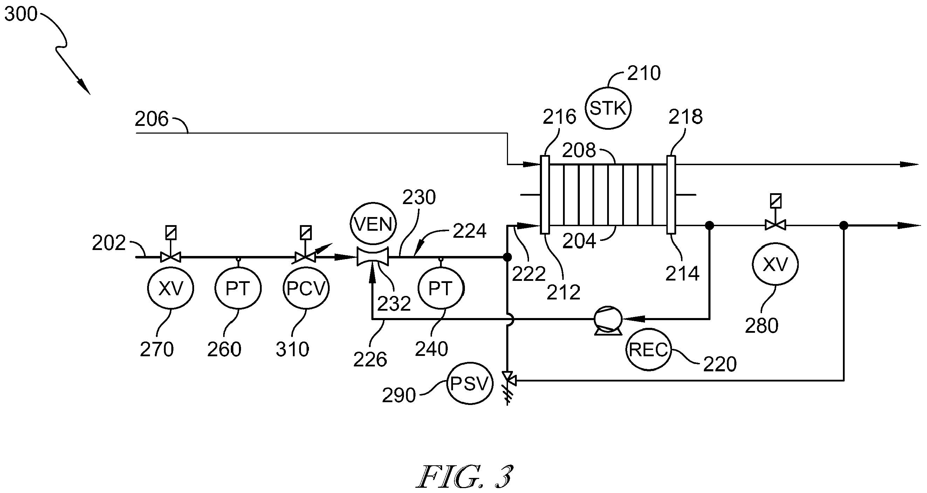

In one embodiment, as illustrated in the operating system **300** shown in **FIG. 3,** a proportional control valve **310** may be used instead of a mechanical regulator **250**. A proportional control valve **310** is electronically controlled and may provide more flexibility in controlling the single point pressure at the anode **204** than mechanical regulator **250**. In one embodiment, the proportional control valve **310** may be used to control the primary flow in an operating system **300.** In other embodiments, an injector (not shown) may be used instead of a proportional control valve **310**.

For example, the proportional control valve **310** may beneficially allow for active management of the differential pressure, may avoid droop issues, and/or provide flexibility in operating the fuel cell stack **210** under different operating conditions. Illustrative operating conditions may include, but are not limited to operating current density, operating pressure, operating temperature, operating relative humidity, fuel supply pressure, fuel supply temperature, required secondary flow, entrainment ratio, parasitic load limitations, power needs, pressure loses in the AGR loop **224,** venturi or ejector **230** performance and/or efficiency, recirculation pump or blower **220** performance and/or efficiency, fuel density, purge flow, and choked or unchoked (e.g., not choked) flow conditions.

The turn down ratio of a system **200/300** is defined as the ratio of the maximum capacity of the venturi or ejector **230** to the minimum capacity of the venturi or ejector **230**. In one embodiment, the venturi or ejector **230** may draw the recirculation flow **226** using a primary flow exergy. The turn down ratio characterizes the range over which the venturi or ejector **230** can deliver the required excess fuel ratio to the fuel cell stack **210**. In one embodiment, the present operating system **200/300** may be designed to maximize the venturi or ejector **230** turn down ratio. Consequently, maximizing the turn down ratio of the venturi or ejector **230** also works to minimize the size and parasitic load associated with the recirculation pump or blower **220**. In some embodiments, the venturi or ejector **230** may be required to operate and/or perform robustly to deliver the required primary flow **202** at the required excess fuel ratio.

In one embodiment, a fuel supply system may supply fuel at a fuel supply pressure (Pcv) and a fuel supply temperature (Tcv). In some embodiments, the sizing pressure ($P_{CV\_MIN}$) may be the minimum inlet pressure at a control valve such as the proportional control valve **310** or mechanical regulator **250** or injector. In other embodiments, fuel sizing pressure ($P_{CV\_MIN}$) may be the pressure at the inlet of a control valve under empty pressure conditions ($P_{EMPTY}$).

In one embodiment, the primary flow **202** may pass through the control valve and enter the venturi or ejector **230** through a primary nozzle at a primary nozzle inlet pressure ($P_O$) and a primary inlet temperature ($T_O$). In other embodiments, the secondary flow **226** may enter the venturi or ejector **230** through a secondary inlet **232** in a suction chamber at a secondary inlet pressure ($P_S$) and a secondary inlet temperature ($T_S$).

In one embodiment, the venturi or ejector **230** may have exergy available in primary flow to induce the anode gas recirculated flow as the secondary flow **226** in the venturi or ejector **230**. In some embodiments, the stack pressure ($\Delta P_{STACK}$) is the pressure loss through the AGR loop **224**. The secondary flow **226** may be lifted against the stack pressure ($\Delta P_{STACK}$).

In one embodiment, the pressure lift ($\Delta P_{LIFT}$) is the pressure required to overcome the pressure loses in the AGR loop **224** ($\Delta P_{STACK}$). In some embodiments, the pressure lift ($\Delta P_{LIFT}$) may be dominated by the pressure losses through the fuel cell stack **210** or any other component of the AGR loop **224**. In some embodiments, pressure losses may be proportional to volumetric flow rate through one or more manifolds and/or channels in the AGR loop **224**. In other embodiments, the volumetric flow **222** at anode inlet **212** may include a mixture of the fresh fuel **202** and the recirculation flow **226**.

In one embodiment, the secondary inlet pressure ($P_S$) may depend on the anode inlet manifold pressure ($P_{AIM}$) of the fuel cell or fuel cell stack **210** and the pressure loses in the AGR loop **224** ($\Delta P_{STACK}$) or the required pressure lift ($\Delta P_{LIFT}$).

$$P_S = P_{AIM} - \Delta P_{LIFT}$$

In one embodiment, the amount of secondary flow **226** that can be entrained is dictated by the boundary conditions of system **200/300** and the efficiency of the venturi or ejector **230**. In some embodiments, the boundary conditions may be the primary nozzle inlet pressure ($P_O$), the secondary inlet pressure ($P_S$), the anode inlet manifold pressure ($P_{AIM}$) of the fuel cell or fuel cell stack **210,** and/or secondary flow **226** composition. In some embodiments, the secondary flow **226** from the anode outlet **214** to the venturi or ejector inlet **232** is an adiabatic process. In other embodiments, the primary inlet temperature ($T_O$) and the secondary inlet temperature ($T_S$) of the venturi or ejector **230** may affect secondary flow **226**.

In one embodiment, as described earlier, above a certain critical current density ($i_{LO\_CR}$) **130,** the system **200/300** is required to operate in the target anode inlet manifold pressure range indicated by the curve **160** in **FIG. 1**. In some embodiments, the primary inlet pressure ($P_O$) decreases proportionally with a decrease in primary fuel demand, until the primary nozzle is no longer choked (unchoked). In other embodiments, if the primary nozzle is unchoked, the rate of decrease of the primary inlet pressure ($P_O$) may be non-linear and/or sensitive to downstream pressure such as the secondary inlet pressure (Ps). In other embodiments, the primary inlet pressure ($P_O$) may decrease as the primary inlet temperature (To) decreases.

In one embodiment, the primary inlet temperature ($T_O$) may be equal to the fuel supply temperature ($T_{CV}$). In some embodiments, the primary inlet temperature ($T_O$) may affect the primary flow **202**. In some embodiments, the system **200/300** may have a target mass flow rate. In other embodiments, the secondary inlet temperature ($T_S$) may influence the secondary flow **226** through geometric constraints of the secondary inlet **232** and/or the venturi or ejector **230**. In some other embodiments, thermodynamic constraints and/or venturi or ejector **230** efficiency may influence the secondary flow **226**.

In one embodiment, the venturi or ejector **230** is sensitive to the primary nozzle inlet pressure ($P_O$), the backpressure, and the required pressure lift ($\Delta P_{LIFT}$). In some embodiments, the backpressure may be exit pressure of the venturi or ejector **230** ($P_C$) or the anode inlet manifold pressure ($P_{AIM}$). In other embodiments, if there are no pressure losses to the anode inlet manifold from the venturi or ejector **230** outlet, the exit pressure at the venturi or ejector **230** (Pc) may be equal to the anode inlet manifold pressure ($P_{AIM}$). In some embodiment, the primary nozzle inlet pressure ($P_O$) may be a function of the current density (i) in the system **200/300.**

$$P_O = f(i)$$

In one embodiment, the entrainment ratio (ER) is a measure of the performance and/or capability of the venturi or ejector **230** and may be sensitive to the primary nozzle inlet pressure (Po), the backpressure (e.g., Pc, $P_{AIM}$) and/or the pressure lift ($AP_{LIFT}$). In one embodiment, as backpressure (e.g., $P_C$, $P_{AIM}$) increases, the venturi or ejector **230** may change from being double choked (with a stable entrainment ratio), to being in a transitioning condition (with a decreasing entrainment ratio), to having a reverse flow. Reverse flow in the venturi or ejector **230** may be undesirable as reverse flow indicates no fuel recirculation through the AGR loop **224.** In some embodiments, the venturi or ejector **230** may need to offset pressure losses through the fuel cell or fuel cell stack **210** ($\Delta P_{STACK}$), while operating against the backpressure (e.g., $P_C$, $P_{AIM}$).

In one embodiment, the reversible entrainment ratio (RER) or the reversible portion of the entrainment ratio (ER) based on the thermodynamic limits, is defined as:

$$RER = - \Delta \chi_{\_M} / \Delta \chi_{\_S}$$

$\Delta_{\chi\_M}$ is the motive flow exergy and $\Delta_{\chi\_S}$ is the entrained flow exergy.

In one embodiment, the venturi or ejector **230** may be sized such that the venturi or ejector **230** may be able to support the entrainment ratio (ER) at high current densities. In some embodiments, such sizing of the venturi or ejector **230** may increase the parasitic savings by decreasing the size of the recirculation pump or blower **220** used in the system **400.**

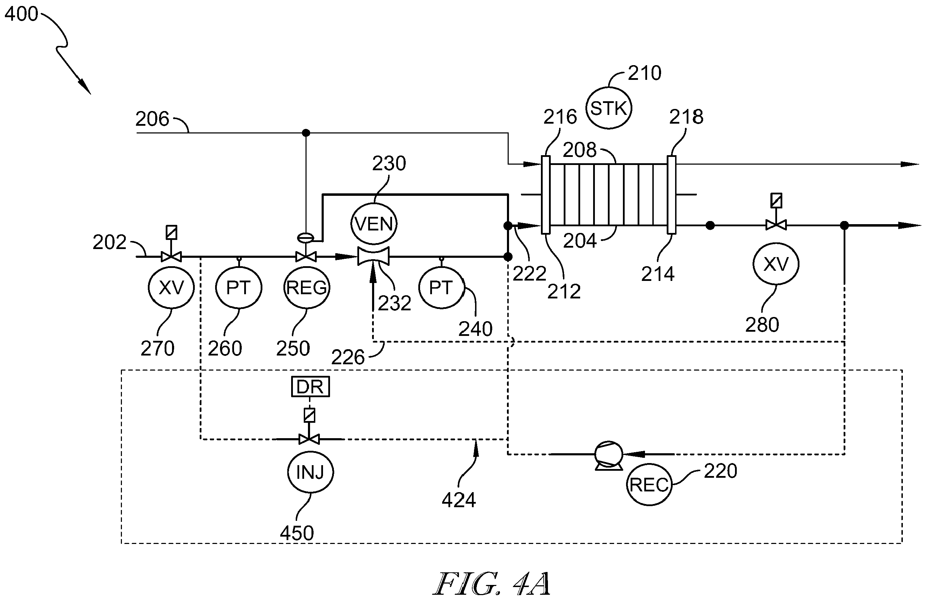

In one embodiment, as shown in **FIG. 4A,** a downsized or small venturi or ejector **230** may be used in parallel with a recirculation pump or blower **220** supported fueling path **224.** In some embodiments, there may be a by-pass valve **450** upstream or downstream of the control valve such as the mechanical regulator **250.** In other embodiments, the system **400** may comprise a proportional control valve or an injector instead of the mechanical regulator **250.** In some other embodiments, the by-pass valve **450** may be a mechanical regulator, a proportional control valve or an injector.

In one embodiment, the venturi or ejector **230** may be downsized to meet the choked primary flow condition at and above the excess fuel ratio current density threshold ($i_{\lambda\_THV}$) **150.** In some embodiments, this may enable robust operation of the system **400** across the entire operating range. In other embodiments, the empty pressure ($P_{EMPTY}$) that could be supported by the system may be a limitation. In some embodiments, the system may be able to support a high empty pressure ($P_{EMPTY}$) such about 40 bara or higher.

In one embodiment, a variable fuel supply pressure ($P_{CV}$) may be used in combination with the downsized venturi or ejector **230.** In some embodiments, the operating range of the system **400** may be extended down to zero under conditions when the fuel supply pressure ($P_{CV}$) is greater than a minimum fuel supply pressure ($P_{\_CV\_MIN}$). In other embodiments, the system may need to open the by-pass valve if the fuel supply pressure ($P_{CV}$) drops below the required level to put full flow through the primary nozzle. In some other embodiments, the opening point of the by-pass valve would vary with the available fuel supply pressure ($P_{CV}$)

In one embodiment, if the fuel supply pressure (Pcv) falls below a certain level such as about 40 bara, an alternative means of providing primary flow and recirculation flow may be required. In some embodiments, while fuel supply pressure ($P_{CV}$) is greater than 40 bara, they may be no parasitic load across the entire operating range. The venturi or ejector **230** may fulfill entrainment ratio requirements. In one embodiment, if the fuel supply pressure (Pcv) is about 700 bara, the venturi or ejector **230** in the system **400** would fulfill entrainment ratio requirements from a condition of full tank (700 bara) down to 40 bara, accounting for greater than about 92% of the fuel supply capacity. In other embodiments, when the fuel supply pressure (Pcv) drops to about 350 bara, the venturi or ejector **230** in the system **400** would fulfill entrainment ratio requirements from a condition of full tank (350 bara) down to 40 bar, accounting for greater than about 85% of the fuel supply capacity. In some other embodiments, when the fuel supply pressure (Pcv) drops to about 40 bara, the by-pass loop **224** comprising the recirculation pump or blower **220** may need to be engaged.

In one embodiment, the system **400** may be designed to protect for the fuel supply pressure (Pcv) of about 14 bara. In some embodiments, the venturi or ejector **230** may provide primary flow up to about 35% of the maximum current density. For example, if the maximum current density is 1.6 Amps/cm², the venturi or ejector **230** may provide primary flow up to about 0.56 Amps/cm². The by-pass loop **224** comprising the recirculation pump or blower **220** may support about 65% of the primary flow. Thus, in some embodiments, the recirculation pump or blower **220** may be sized to provide about 65% of the primary flow comprising the nonejector system. In some embodiments, the system **400** may turn on a dashboard light such as a malfunction indicator lamp to indicate that refueling of fuel tank is required.

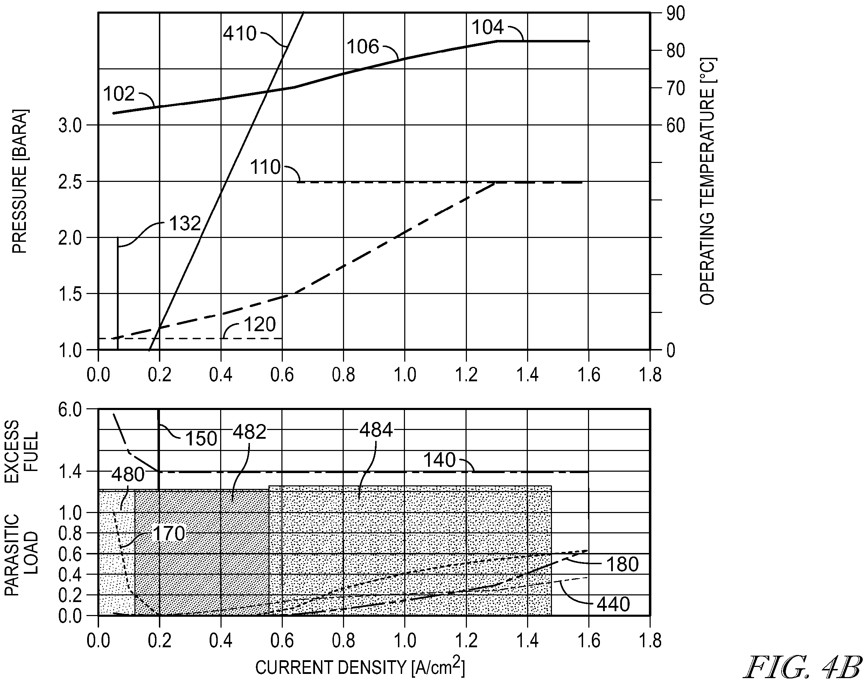

In one embodiment, as shown in **FIG. 4B,** the maximum anode inlet manifold pressure ($P_{AIM}$) preferred by the venturi or ejector **230** i.e. maximum ejector pressure ($P_{\_AIM\_EJCT\_MAX}$) preferred by the venturi or ejector **230** as a function of current density is shown by the curve **410**. In one embodiment, the system **400** may be designed such that for greater than about 85% of the operating range (in regions **480, 482**), there may be no parasitic load due to fuel management recirculation (i.e. no parasitic load due to the use of the recirculation pump or blower **220**). In other embodiments, the recirculation pump or blower **220**) may need to be used to provide the required primary flow (in regions **484**). The curve **170** shows the fraction of the recirculation flow that is delivered by the recirculation pump or blower **220,** the curve **440** shows the corresponding parasitic savings, and the curve **180** shows the corresponding parasitic load.

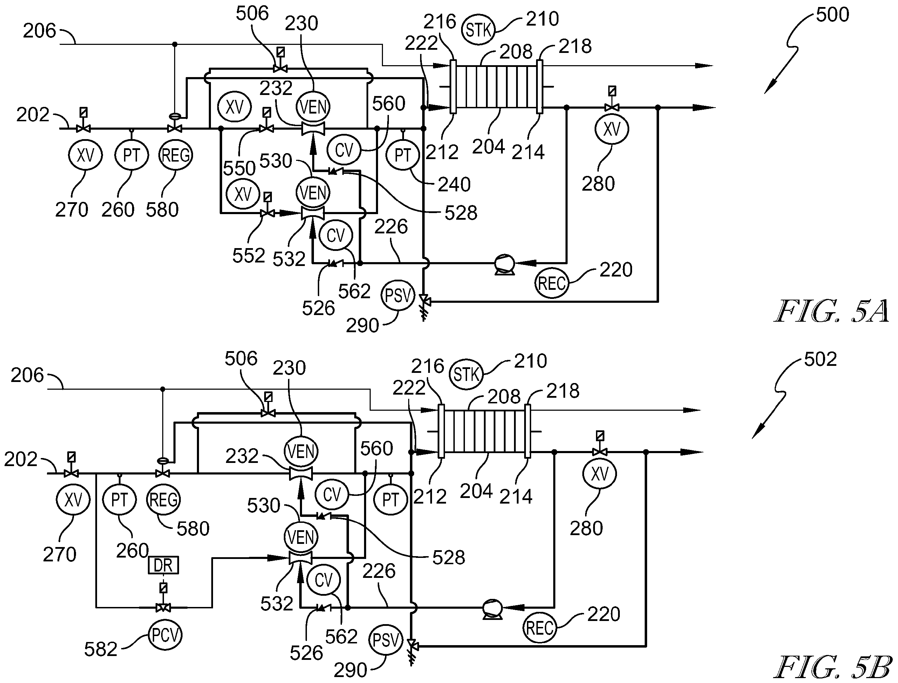

In one embodiment, as shown in **FIG. 5A** and **FIG. 5B,** the system **500/502** may have a second venturi or ejector **530** (ejector 2) in a parallel configuration with the first venturi or ejector **230** (ejector 1). In other embodiments, the system **500/502** may have one or more venturi or ejectors **530** in a parallel configuration with the first venturi or ejector **230**. In some embodiments, the system **500/502** may have more than two to four venturi or ejectors **530** in a parallel configuration with the first venturi or ejector **230**. In some other embodiments, the system **500/502** may have more than four venturi or ejectors 530 in a parallel configuration with the first venturi or ejector **230.**

In one embodiment, as shown in **FIG. 5A** and **FIG. 5B,** the system **500/502** may have a control valve **580** upstream of the venturi or ejector **230/530**. In some embodiments, the control valve **580** may be a mechanical regulator, a dome regulated mechanical regulator, a proportional control valve, or an injector.

In one embodiments, the two or more venturi or ejector **230/530** may be of the same size. In other embodiments, the two or more venturi or ejector **230/530** may be of different sizes. In some embodiments, the two or more venturi or ejector **230/530** may be sized differently to retain the overall efficiency or performance of the two or more venturi or ejector **230/530**. In some embodiments, size of a venturi or ejector **230/530** may include, but is not limited to measurements related to primary nozzle flow area, internal mixer area, mixer length, suction chamber design, diffuser expansion angle and diffusion expansion length.

In one embodiment, the recirculation pump or blower **220** may be a part of the system **500/502**. In some embodiments, the recirculation pump or blower **220** may be in a parallel or series configuration with the two or more venturi or ejectors **230/530**. In other embodiments, the recirculation pump or blower **220** may not be a part of the system **500/502.**

In one embodiment, the system **500/502** may have one or more by-pass valves. The by-pass valves may be located across one or more venturi or ejector **230/530**. In one preferred embodiment, as shown in **FIG. 5A** and **FIG. 5B,** the system **500/502** may have a by-pass valve **506** downstream of the control valve **580,** around the venturi or ejector **230**. In some other embodiments, the system **500/502** may also have an additional by-pass valve (not shown) around the venturi or ejector **530**. This configuration may not be preferred as it adds additional hardware to the system **500/502**. In a further embodiment, the system **500/502** may have a by-pass valve **506** upstream of the control valve **580**.

In one embodiment, as shown in **FIG.** 5A, the system **500/502** may engage venturi or ejector **230** or one or more venturi or ejector **530,** or both venturi or ejector **230** and one or more venturi or ejector **530**. In one embodiment, the transition from using one venturi or ejector **230/530** to using two or more ejectors **230/530** in the system **500** may not require more than one valve **552**. In some embodiments, there may be some pressure losses in the system **500** associated with the secondary flow **226**.

In one embodiment, the primary flow **202** to the two or more venturi or ejector **530/230** may be regulated by one or more valves **550/552**. In some embodiments, the two or more valves **550/552** may be a proportional control valve or a mechanical regulator or a dome loaded mechanical regulator or an injector. In one embodiment, one of the two or more valves **550/552** may be a mechanical regulator. In other embodiments, one of the two or more valves **550/552** may be a proportional control valve. In other embodiments, one of the two or more valves **550/552** may be a dome loaded mechanical regulator. In some other embodiments, one of the two or more valves **550/552** may be an injector.

In one embodiment, each of the two or more venturi or ejector **230/530** has to work against the entire pressure lift of the system **500** ($\Delta P_{LIFT}$), but is required to only lift the flow associated with the flow through primary nozzle of that respective venturi or ejector **230/530**. In some embodiments, the valves regulating flow to the two or more venturi or ejector may **530/230** open and/or close to direct the primary flow **202** to the two or more venturi or ejector **530/230**. In some embodiments, a part of the primary flow **202** may flow through the first of the two or more venturi or ejector **230/530,** and a part of the primary flow **202** may flow through a second of the two or more venturi or ejector **230/530**. In some embodiments, the primary flow **202** may be equally divided between the two or more venturi or ejector **230/530**. In other embodiments, the primary flow **202** may be unequally divided between the two or more venturi or ejector **230/530**

In one embodiment, a part of the secondary flow **226** may enter the venturi or ejector **230** at **232** and a part the secondary flow **226** may enter the one or more venturi or ejector **530** at **532**. In some embodiments, the secondary flow **226** may not enter the venturi or ejector **230** at **232** and all of the secondary flow **226** may enter the one or more venturi or ejector **530** at **532**. In other embodiments, the secondary flow **226** may not enter the one or more venturi or ejector **530** at **532** and all of the secondary flow **226** may enter the venturi or ejector **230** at **232**. In some further embodiments, the secondary flow **226** through the venturi or ejector **230/530** may be regulated by check valves that prevent reverse flow **560/562.**

In one embodiment, the system **500** may have two or more venturi or ejector **230/530,** and may not have a recirculation pump or blower **220.** In some embodiments, check valves that prevent reverse flow **560/562** may disconnect one of the two or more venturi or ejector **230/530** from the recirculation pump or blower **220.** In some embodiments, the system may achieve the target entrainment ratio (ER) without requiring a recirculation pump or blower **220** and reducing parasitic loads. In other embodiments, the system may achieve the target entrainment ratio (ER) by using a smaller recirculation pump or blower **220** than what would have been required if the system **500** had only one venturi or ejector **230.** In some embodiments, there may be some pressure losses in the system **500** associated with the secondary flow **226,** and or the one or more valves **550/552.**

In one embodiment, as shown in **FIG. 5B,** the system **502** may include a control valve **580** and an additional control valve **582** instead on the open close valves **550/552** ahead of the two venture or ejectors **230/530.** In some embodiments, the additional control valve **582** may be a mechanical regulator, a dome regulated mechanical regulator, a proportional control valve, or an injector. In other embodiments, the control valve **582** may be equipped to completely shut off flow to the venturi or ejector **532.** In some embodiments, the control valves **580** and **582** may be the same or may be different. Such a configuration provides the system **502** with an additional flexibility in controlling pressure and/or primary fuel flow as it provides the system with two separate flow control valves, each independently controlling the primary flow **202** into their respective venturi or ejectors **230/530.**

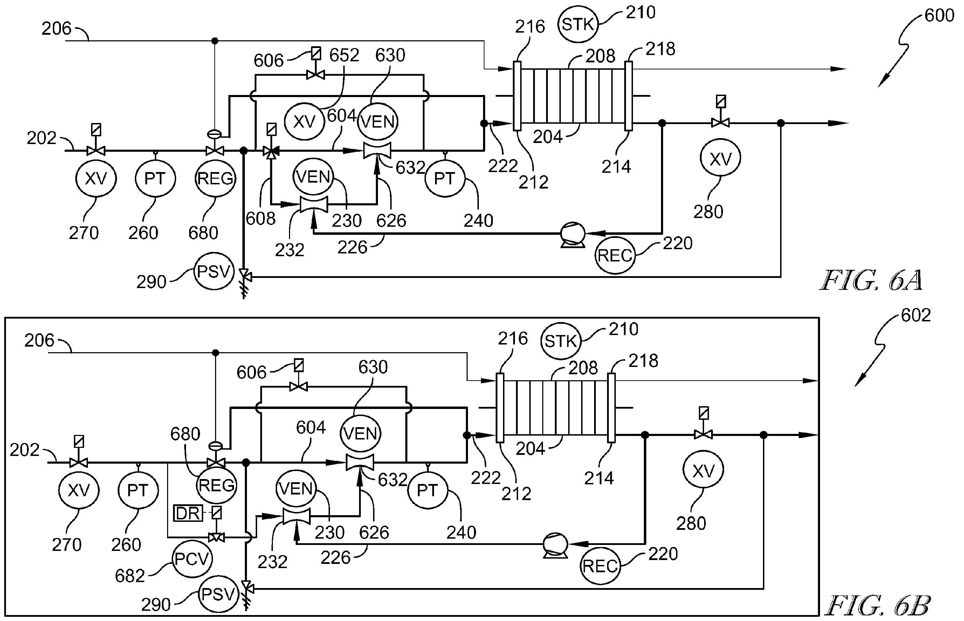

In one embodiment, as shown in **FIG. 6A** and **FIG. 6B,** the system **600/602** may have a second venturi or ejector **630** (ejector 2) in a series configuration with the first venturi or ejector **230** (ejector 1). In other embodiments, the system **600** may have one or more venturi or ejectors **630** in a series configuration with the first venturi or ejector **230.** In some embodiments, the system **600** may have two to four venturi or ejectors **630** in a series configuration with the first venturi or ejector **230.** In some other embodiments, the system **600** may have more than four venturi or ejectors **630** in a series configuration with the first venturi or ejector **230.**

In one embodiment, as shown in **FIG. 6A** and **FIG. 6B,** the system **600/602** may have a control valve **680** upstream of the venturi or ejector **230/630.** In some embodiments, the control valve **680** may be a mechanical regulator, a dome regulated mechanical regulator, a proportional control valve, or an injector.

In one embodiments, the two or more venturi or ejector **230/630** may be of the same size. In other embodiments, the two or more venturi or ejector **230/630** may be of different sizes. In some embodiments, the two or more venturi or ejector **230/530** may be sized differently to retain the overall efficiency or performance of the two or more venturi or ejector **230/530.** In some embodiments, size of a venturi or ejector **230/530** may include, but is not limited to measurements related to primary nozzle flow area, internal mixer area, mixer length, suction chamber design, diffuser expansion angle and diffusion expansion length.

In one embodiment, the recirculation pump or blower **220** may be a part of the system **600/602.** In some embodiments, the recirculation pump or blower **220** may be in a parallel or series configuration with the two or more venturi or ejectors **230/630.** In other embodiments, the recirculation pump or blower **220** may not be a part of the system **600/602.**

In one embodiment, the system **600/602** may have one or more by-pass valves. The by-pass valves may be located across one or more venturi or ejector **230/630.** In one preferred embodiment, as shown in **FIG. 6A** and **FIG. 6B,** the system **600/602** may have a by-pass valve **606** downstream of the control valve **680,** around the venturi or ejector **630.** In some other embodiments, the system **600/602** may have an additional by-pass valve (not shown) around the venturi or ejector **230.** In a further embodiment, the system **600/602** may have a by-pass valve **606** upstream of the control valve **680.**

In one embodiment, the primary flow **202** to the two or more venturi or ejector **630/230** may be regulated by one valve **652.** In some embodiments, the valve **652** may be a proportional control valve or a mechanical regulator or a dome loaded mechanical regulator or an injector. In other embodiments, the primary flow **202** to the two or more venturi or ejector **630/230** may be regulated by more than one valve **652.** In some embodiments, the valve **652** may regulate the primary flow **202** entirely to the venturi or ejector **230.** In other embodiments, the valve **652** may regulate the primary flow **202** entirely to the venturi or ejector **630.** In some other embodiments, the valve **652** may regulate the primary flow **202** to be dived between the venturi or ejector **230** and one or more venturi or ejector **630.**

In one embodiment, the system **600** may engage venturi or ejector **230** (solo configuration) or one or more venturi or ejector **630** (solo configuration), or both venturi or ejector **230** and one or more venturi or ejector **630** (dual configuration). In some embodiments, the transition from using one venturi or ejector **230/630** to using two or more ejectors **230/630** may not require more than one valve **652.** In other embodiments, the transition from using one venturi or ejector **230/630** to using two or more ejectors **230/630** may require more than one valve **652.** In some embodiments, there may be some pressure losses in the system **600** associated with the secondary flow **226.**

In one embodiment, as shown in **FIG. 6B,** the system **602** may include a control valve 682 **in** additional to the control valve **680** instead of the open close valves **652** ahead of the two venturi or ejectors **230/630.** In some embodiments, the additional control valve **682** may be a mechanical regulator, a dome regulated mechanical regulator, a proportional control valve, or an injector. In other embodiments, the control valve **682** may be equipped to completely shut off flow to the venturi or ejector **632**. In some embodiments, the control valves **680** and **682** may be the same or may be different. Such a configuration provides the system **602** with an additional flexibility in controlling pressure and/or primary fuel flow as it provides the system with two separate flow control valves, each independently controlling the primary flow **202** into their respective venturi or ejectors **230/630**.

In one embodiment, each of the two or more venturi or ejector **630** has to work against the entire pressure lift of the system **600** ($\Delta P_{LIFT}$) if functioning in a solo configuration. In some embodiment, each of the two or more venturi or ejector **630** may not have to work against the entire pressure lift of the system **600** ($\Delta P_{LIFT}$) if functioning in a dual or multiple configuration.

In one embodiment, in a series configuration as illustrated in **FIG. 6,** if both venturi or ejector **230** and venturi or ejector **630** are operational (i.e. in a dual configuration), each venturi or ejector **230/630** may need to lift the entire recirculation flow (secondary flow) **226** through a fraction of pressure lift ($\Delta P_{LIFT}$) in the system **600/602**. In some embodiments, the secondary flow **226** may enter the venturi or ejector **230** at **232**. The secondary flow **626** entering the venturi or ejector **630** at **632** may comprise the secondary flow **226** and the primary flow **608** entering the venturi or ejector **230**. The primary flow **604** enters the venturi or ejector **630** at **632**. Thus, unlike in a parallel configuration, the additional venturi or ejector **630** has extra secondary flow because the venturi or ejector **630** has to lift the primary flow **608** from the venturi or ejector **230**.

In one embodiment, the secondary flow properties of the venturi or ejector **630** may be different from the secondary flow properties of the venturi or ejector **230**. In some embodiments, the secondary flow **626** through the venturi or ejector **630** may be drier and/or have a higher fuel concentration (e.g., $H_2$) than the secondary flow **226** through the venturi or ejector **230**. In other embodiments, the secondary flow **626** through the venturi or ejector **630** may have different temperature than the secondary flow **226** through the venturi or ejector **230**. In some other embodiments, the secondary flow **626** through the venturi or ejector **630** may have different density than the secondary flow **226** through the venturi or ejector **230**.

In one embodiment, the one or more venturi or ejector **530/630** may be sensitive to the anode inlet manifold pressure ($P_{AIM}$) and/or the fuel supply pressure ($P_{CV}$) of the system **500/502/600/602**. In some embodiment, the mixer area ratio (MAR) of the venturi or ejector **230/530** used in a parallel configuration is different than the mixer area ratio (MAR) of the venturi or ejector **230/630** used in a series configuration. In other embodiments, the mixer area ratio (MAR) of the venturi or ejector **230/530/630** is sensitive to how the venturi or ejector **230/530/630** are configured in the system **500/502/600/602**.

In one embodiment, the mixer area ratio (MAR) of the venturi or ejector in a series configuration **630** may need be larger than the mixer area ratio (MAR) of the venturi or ejector in a parallel configuration **530**. In one embodiment, if all else is equal, the mixer area ratio (MAR) of the venturi or ejector **230/530/630** may be a critical parameter that influences entrainment ratio (ER) vs pressure lift ($\Delta P_{LIFT}$) capability of the system **500/502/600/602**. In some embodiments, a larger mixer area ratio (MAR) enables a larger entrainment ratio (ER), but lower pressure lift ($\Delta P_{LIFT}$) capability at the same primary nozzle flow **202**.

In one embodiment, sizing of the more than one venturi or ejector **230/530** in a parallel configuration or the more than one venturi or ejector **230/630** in a series configuration is critical for determining the entrainment ratio (ER) vs pressure lift ($\Delta P_{LIFT}$) capability of the system **500/502/600/602**. In some embodiments, the factors affecting primary nozzle sizing are similar in parallel (**FIG. 5**) and series configuration (**FIG. 6**). In other embodiments, the sizing of other geometric parameters may vary between the parallel (**FIG. 5**) and series configuration (**FIG. 6**).

In one embodiment, the ratio of the primary nozzle of the venturi or ejector **230** (ejector 1) to the primary nozzle of the venturi or ejector **530/630** (ejector 2) may be equal to the ratio of the inlet diameter of the primary nozzle of the venturi or ejector **230** (ejector 1) to the inlet diameter of the of the primary nozzle of the venturi or ejector **530/630** (ejector 2). In some embodiments, the ratio of the primary nozzle of the venturi or ejector **230** (ejector 1) to the primary nozzle of the venturi or ejector **530/630** (ejector 2) may be equal to the ratio of the inlet area of the primary nozzle of the venturi or ejector **230** (ejector 1) to the inlet area of the of the primary nozzle venturi or ejector **530/630** (ejector 2). In some other embodiments, the ratio of the primary nozzle of the venturi or ejector **230** (ejector 1) to the primary nozzle of the venturi or ejector **530/630** (ejector 2) may be equal to the ratio of the outlet diameter of the of the primary nozzle of the venturi or ejector **230** (ejector 1) to the outlet diameter of the of the primary nozzle of the venturi or ejector **530/630** (ejector 2).

In one embodiment, the more than one venturi or ejector **230/530** in a parallel configuration or the more than one venturi or ejector **230/630** in a series configuration may be sized according to the minimum fuel supply pressure ($P_{CV\_MIN}$) for both venturi or ejectors (**230** and **530** or **230** and **630**). In some embodiments, the venturi or ejector **230** (ejector 1) may be sized to cover half the range of the venturi or ejector **530/630** (ejector 2). In some embodiments, the relative sizing of the venturi or ejector **230** (ejector 1) and venturi or ejector **530/630** (ejector 2) may depend on the turn down ratio of the venturi or ejectors (**230** and **530** or **230** and **630**). The turn down ratio ejector **230** (ejector 1) and venturi or ejector **530/630** (ejector 2) may be the same, or may be different from each other.

For example, in one embodiment, if the turn down ratio of both venturi or ejectors (**230** and **530** or **230** and **630**) is 2, the venturi or ejector **530/630** (ejector 1) may be sized to cover the range of about 16.7% to about 33.3% of the primary flow, and the venturi or ejector **530/630** (ejector 2) may be sized to provide about 33.3% to about 66.7% of the primary flow. Together, venturi or ejector **230** (ejector 1) and venturi or ejector **530/630** (ejector 2) may be sized to cover the range of about 66.7% to about 100% of primary flow. In other embodiments, if the turn down ratio of both venturi or ejectors (**230** and **530** or **230** and **630**) is 3, the venturi or ejector **530/630** (ejector 1) may be sized to cover the range of about 8.33% to about 25% of the primary flow, and the venturi or ejector **530/630** (ejector 2) may be sized to provide about 25% to about 75% of the primary flow. Together, venturi or ejector **230** (ejector 1) and venturi or ejector **530/630** (ejector 2) may be sized to cover the range of about 50% to about 100% of primary flow. In some other embodiments, if the turn down ratio of both venturi or ejectors (**230** and **530** or **230** and **630**) is 1.5, the venturi or ejector **530/630** (ejector 1) may be sized to cover the range of about 26.6% to about 40% of the primary flow, and the venturi or ejector **530/630** (ejector 2) may be sized to provide about 40% to about 60% of the primary flow. Together, venturi or ejector **230** (ejector 1) and venturi or ejector **530/630** (ejector 2) may be sized to cover the range of about 60% to about 100% of primary flow.

In one embodiment, the venturi or ejector **230** (ejector 1) may have a turn down ratio in the range from about 1.5 to about 8, including any ratio comprised therein. In some embodiments, the venturi or ejector **530/630** (ejector 2) may have a turn down ratio in the range from about 1.5 to about 8, including any ratio comprised therein. In some embodiments, the venturi or ejector **230** (ejector 1) and/or the venturi or ejector **530/630** (ejector 2) may be sized according to their turn down ratios. For example, if the turn down ratio of both venturi or ejectors (**230** and **530** or **230** and **630**) is 8, the venturi or ejector **530/630** (ejector 1) may be sized to cover the range of about 1.4% to about 11.1% of the primary flow, and the venturi or ejector **530/630** (ejector 2) may be sized to provide about 11.1% to about 89% of the primary flow.

In other embodiments, the sizing of the venturi or ejectors may depend on the number of venturi or ejectors in the system **500/502/600/602**. In other embodiments, the venturi or ejector **230** (ejector 1) and the venturi or ejector **530/630** (ejector 2) may be sized to cover different ratios of the operating range of the system **500/502/600/602**.

In one embodiment, the system **500/502/600/602** may have a by-pass valve **506/606** configured to account for the entrainment ratio (ER) at higher operating ranges such as above about 0.4 Amps/cm$^2$, or above about 0.6 Amps/cm$^2$, or above about 0.8 Amps/cm$^2$, or above about 1.0 Amps/cm$^2$, or above about 1.2 Amps/cm$^2$. In other embodiments, the by-pass valve **506/606** may be configured to account for the entrainment ratio (ER) at operating ranges up to the highest operating range of the system **500/502/600/602**

In some embodiments, the venturi or ejector **230** (ejector 1) and the venturi or ejector **530/630** (ejector 2) may be sized to account for the entrainment ratio (ER) at operating ranges below the operating range accounted for by the by-pass valve **506/606**. For example, the venturi or ejector **230** (ejector 1) and the venturi or ejector **530/630** (ejector 2) may be sized such that both the venturi or ejector **230** (ejector 1) and the venturi or ejector **530/630** (ejector 2) can together account for the entrainment ratio (ER) at operating ranges below about 0.4 Amps/cm$^2$, or below about 0.6 Amps/cm$^2$, or below about 0.8 Amps/cm$^2$, or below about 1.0 Amps/cm$^2$, or below about 1.2 Amps/cm$^2$.

In other embodiments, the venturi or ejector **230** (ejector 1) may be sized to cover half the range of the venturi or ejector **530/630** (ejector 2), such that both the venturi or ejector **230** (ejector 1) and the venturi or ejector **530/630** (ejector 2) can together account for the entrainment ratio (ER) at operating ranges below the operating range accounted for by the by-pass valve **506/606**. For example, the venturi or ejector **230** (ejector 1) may be sized to cover half the range of the venturi or ejector **530/630** (ejector 2), such that both the venturi or ejector **230** (ejector 1) and the venturi or ejector **530/630** (ejector 2) can together account for the entrainment ratio (ER) at operating ranges below about 0.4 Amps/cm$^2$, or below about 0.6 Amps/cm$^2$, or below about 0.8 Amps/cm$^2$, or below about 1.0 Amps/cm$^2$, or below about 1.2 Amps/cm$^2$. In other embodiments, the venturi or ejector **230** (ejector 1) and the venturi or ejector **530/630** (ejector 2) may be sized to cover different ratios of the operating range below the operating range accounted for by the by-pass valve **506/606**.

In one embodiment, the venturi or ejector **230** (ejector 1) receiving the secondary flow **226** may be sized to provide the full secondary flow **226** requirement at the lowest target operating current i.e. the excess fuel ratio current density threshold (i$_{\lambda\_THV}$) **150**. In some embodiments, the lowest target operating current may be different from the excess fuel ratio current density threshold.

In one embodiment, the system **500/502/600/602** may have a by-pass valve **506/606** configured to account for the entrainment ratio (ER) at higher operating ranges such as above about 0.4 Amps/cm$^2$, or above about 0.6 Amps/cm$^2$, or above about 0.8 Amps/cm$^2$, or above about 1.0 Amps/cm$^2$, or above about 1.2 Amps/cm$^2$. The venturi or ejector **230** (ejector 1) receiving the secondary flow **226** may be sized to provide the full secondary flow **226** requirement at the lowest target operating current i.e. the excess fuel ratio current density threshold (i$_{\lambda\_THV}$) **150,** and the venturi or ejector **530/630** (ejector 2) may be sized to account the operating range above the operating range accounted for by the venturi or ejector **230** (ejector 1) and below the operating range accounted for by the by-pass valve **506/606**.

In one embodiment, at the lowest target operating current threshold (i$_{\lambda\_THV}$) **150,** the primary nozzle inlet pressure (P$_{o\_i\_\lambda\_THV}$) is:

$$P_{O\_i\_\lambda\_THV} = P_{AIM\_i\_\lambda\_THV} \times pr_{CR}$$

$P_{AIM\_i\_\lambda\_THV}$ is the anode inlet manifold pressure at the lowest target operating current threshold ($i_{\_\lambda\_THV}$). The critical pressure ($pr_{CR}$) is ~1.9 bara for $H_2$.

In one embodiment, the primary nozzle may be sized to meet maximum primary flow, including the purge flow. The primary nozzle inlet pressure in the primary nozzle sized to meet maximum primary flow, including the purge flow at the lowest target operating current threshold ($i_{\_\lambda\_THV}$) **150** ($P_{O\_CV\_THV}$) is:

$$P_{O\_CV\_THV} = P_{O\_i\_\lambda\_THV} \times i_{MAX\_P} / i_{\_\lambda\_THV}$$

The fuel supply pressure threshold ($P_{\_CV\_THV}$) is

$$P_{\_CV\_THV} = P_{O\_CV\_THV} \times P_{\_CR}$$

The maximum current ($i_{MAX}$) accounting for the purge flow is the maximum current with purge ($i_{MAX\_P}$), given by:

$$i_{MAX\_P} = i_{MAX}(1 + prg)$$

The fraction of purge flow is given by prg.

In one embodiment, when the fuel supply pressure ($Pcv$) is greater than the fuel supply pressure threshold ($P_{\_CV\_THV}$), the venturi or ejector **230** (ejector 1) may provide almost 100% of the primary and recirculated flow in the system **600/602.** In some embodiments, the mixer area ratio (MAR) and other parameters may be sized to enable the required entrainment ratio to be maintained across the entire operating range. In one embodiments, if lowest target operating current ($i_{\_\lambda\_THV}$) is 0.2 Amps/cm2, the critical pressure ($pr_{CR}$) is 1.9 bara, and the anode inlet manifold pressure at the lowest target operating current $P_{AIM}(i_{\_\lambda\_THV})$ is 1.2 bara, the primary inlet nozzle pressure at the lowest target operating current ($P_{O}(i_{\_\lambda\_THV})$ is 2.28 bara. If the maximum current ($i_{MAX}$) is 1.6 Amps/cm2, and the purge flow is 10%, the primary inlet nozzle pressure at fuel supply pressure threshold ($P_{O\_CV\_THV}$) is 20.1 bara and the fuel supply pressure threshold ($P_{\_CV\_THV}$) is 38.1 bara.

In one embodiment, the venturi or ejector **530/630** (ejector 2) may be sized to enable full primary flow requirement to be met at the fuel supply pressure threshold ($P_{\_CV\_THV}$). In one embodiment, the total effective flow area of the primary nozzles of a venturi or ejector **530/630** may be based on the maximum current at purge ($i_{MAX\_P}$) and the fuel sizing pressure ($P_{\_CV\_MIN}$). In some embodiments, the effective flow area of the primary nozzle of the venturi or ejector **630** (ejector 2) i.e. $A_{EFF\_EJCT2}$ is:

$$A_{EFF\_EJCT2} = A_{\_EFF\_TOT} - A_{EFF\_EJCT1}$$

$A_{EFF\_EJCT1}$ is the effective flow area of the primary nozzle of the venturi or ejector **230** (ejector 1), and $A_{\_EFF\_TOT}$ is the total effective flow area of the primary nozzle of the venturi or ejector **230/630.**

In one embodiment, if the fuel sizing pressure or the minimum control valve inlet pressure ($P_{\_CV\_MIN}$) is about 14 bara, the fraction of purge flow (prg) is 10%, $P_{O\_i\_\lambda\_THV}$ is the minimum primary inlet nozzle pressure needed at the lowest target operating current threshold ($i_{\_\lambda\_THV}$) $P_{O\_P\_i\_\lambda\_THV}$ is the minimum primary inlet nozzle pressure needed for purge flow at the lowest target operating current threshold ($i_{\_\lambda\_THV}$) **150**, $i_{MAX}$ is the maximum current of the system **500/502/600/602** $i_{MAX\_P}$ is maximum current of the system **500/502/600/602** accounting for purge flow, venturi or ejector **230** (ejector 1) and venturi or ejector **530/630** (ejector 2) may be sized as shown in **Table 1.**

**Table 1**

|  | $P_{O\_P\_i\_\lambda\_THV}$ | $A_{EFF}$ | $i_{MAX\_P}$ | $i_{MAX}$ | $P_{O\_i\_\lambda\_THV}$ |
|---|---|---|---|---|---|
| Ejector 1 |  | 1.66 | 0.65 | 0.59 |  |
| Total = | 7.37 | 4.49 | 1.76 | 1.60 | 6.70 |
| Ejector 2 |  | 2.83 | 1.11 | 1.01 |  |

In one embodiment, the system **500/502/600/602** may be configured to ensure division of labor between the venturi or ejector **230** (ejector 1) and the venturi or ejector **630/530** (ejector 2) such that the required entrainment ratio (ER) may be delivered. In some embodiments, the pressure operating curves of the system **500/502/600/602** may influence the division of labor and the switching between solo use (ejector 1 or ejector 2) and dual use. In some embodiments, the mixer area ratio (MAR) and other parameters of the venturi or ejector **230/530/630** may be sized in view of the intended operation of the system **500/600**. In some embodiments, the intended operation may determine if the configuration of the venturi or ejector **230/530/630** are in series or in parallel, or if ejector 1 **230** is required to operate cross the entire operating range.

In one embodiment, the ejector 1 maximum current ($i_{\_MAX\_01}$) is the maximum current that ejector 1 **230** can support on its own at a given fuel supply pressure ($P_{CV}$) and primary inlet temperature ($T_O$). The ejector 2 maximum current ($i_{\_MAX\_02}$) is the maximum current that ejector 2 **530/630** can support on its own at a given fuel supply pressure ($P_{CV}$) and primary inlet temperature ($T_O$). The ejector 1 minimum current ($i_{\_MIN\_01}$) is the minimum current that ejector 1 **230** can support to keep ejector 1 **230** choked. The ejector 2 minimum current ($i_{\_MIN\_02}$) is the minimum current that ejector 2 **530/630** can support to keep ejector 2 **530/630** choked. In one embodiment, the total minimum current ($i_{\_MIN}$) is:

$$i_{\_MIN} = i_{\_MIN\_01} + i_{\_MIN\_02}$$

In one embodiment, if the current demand ($i_{\_DEMAND}$) is less than the lower of the ejector 1 minimum current ($i_{\_MIN\_01}$) and the ejector 2 minimum current ($i_{\_MIN\_02}$), primary flow **202** may go through ejector 1 **230** and the system **500/502/600/602** may operate the recirculation pump or blower **220** to meet the required entrainment ratio (ER). In some embodiments, the primary flow **202** may or may not go through ejector 2 **530/630**.

In one embodiment, the ejector 1 maximum current ($i_{\_MAX\_01}$) is greater than the maximum current in the system **500/502/600/602** ($i_{MAX}$) **134,** then the ejector 1 may be operated solely for any current demand ($i_{\_DEMAND}$). In some embodiments, the ejector 1 **230** may be operated solely for any current demand ($i_{\_DEMAND}$) if

$$P_{CV}/\sqrt{T_O} > P_{\_CV\_THV}/\sqrt{T_{O\_MAX}}$$

$T_{O\_MAX}$ is the maximum primary inlet temperature of the system **500/502/600/602.**

In one embodiment, the ejector 1 maximum current ($i_{\_MAX\_01}$) is lesser than the maximum current in the system **500/502/600/602** ($i_{MAX}$) **134,** then the primary flow **202** may be split between ejector 1 **230** and ejector 2 **530/630**. In some embodiments, as the current demand ($i_{\_DEMAND}$) increases, the system **500/502/600/602** may transition from a solo configuration using ejector 1 **230** to a solo configuration using ejector 2 **530/630**. In other embodiments, as the current demand ($i_{\_DEMAND}$) increases, the system **500/502/600/602** may transition from a solo configuration using ejector 1 **230** or solo configuration using ejector 2 **530/630** to a dual configuration using ejector 1 **230** and ejector 2 **530/630.**

In one embodiment, the system **500/502/600/602** may not transition from using ejector 1 **230** to using ejector 2 **530/630** until the current in the system **500/502/600/602** reaches the ejector 2 minimum current ($i_{\_MIN\_02}$). In some embodiments, the system **500/502/600/602** may not transition away from being a solo configuration using ejector 1 **230** before the current in the system **500/502/600/602** reaches the ejector 1 maximum current ($i_{\_MAX\_01}$). In other embodiments, the system **500/502/600/602** may not transition from a solo configuration to a dual configuration until the total minimum current ($i_{\_MIN}$) is reached. In some other embodiments, the total **500/502/600/602** may transition from a solo configuration to a dual configuration before the ejector 2 maximum current ($i_{\_MAX\_02}$) is reached.

In one embodiment, the system **500/502/600/602** may operate in a solo configuration using ejector 1 **230** to about 1.0 Amps/cm$^2$ when the fuel supply pressure ($P_{cv}$) is greater than the fuel supply pressure threshold ($P_{\_CV\_THV}$). In some embodiments, the mixer area ratio (MAR) of ejector 1 **230** may be designed to the required entrainment ratio (ER) from about 0.2 Amps/cm$^2$ to about 1.0 Amps/cm$^2$. In some embodiments sizing ejector 1 maximum current density to about 1.0 Amps/cm$^2$ may allow for smaller mixing are ratio (MAR) to provide a higher pressure lift ($\Delta P_{LIFT}$) at low flow rates. In other embodiments, a current density to about 1.0 Amps/cm$^2$ may be chosen to minimize the number of transitions the system **500/502/600/602** may have to make between different ejector configurations over system lifetime. In some other embodiments, the system **500/502/600/602** may choose to switch from a solo configuration using ejector 1 **230** to a solo configuration using ejector 2 **530/630**. Such switching may ensure that the ejector 2 minimum current ($i_{\_MIN\_02}$) requirements are met by the system **500/502/600/602**. In some other embodiments, the system **500/502/600/602** may choose to switch from a solo configuration using ejector 1 **230** to a dual configuration instead of switching to a solo configuration using ejector 2 **530/630.**

In one embodiment, the system **500/502/600/602** may have dynamic transition points when the system **500/502/600/602** may switch from one configuration to another. In some embodiments, the system **500/502/600/602** may have a dynamic transition point when the fuel supply pressure ($P_{cv}$) is lower than the fuel supply pressure threshold

($P_{CV\_THV}$).

In one embodiment, when the fuel supply pressure (Pcv) is lower than the fuel supply pressure threshold ($P_{CV\_THV}$), and the fuel supply pressure (Pcv) is such that the ejector 1 maximum current ($i_{MAX\_01}$) is greater than or equal to about 1.1 times the total minimum current ($i_{MIN}$). In some embodiments, the system **500/502/600/602** may operate in a solo configuration using ejector 1 **230** when the current demand ($i_{DEMAND}$) is lower than or equal to the total minimum current ($i_{MIN}$). In some embodiments, the system **500/502/600/602** may transition to a dual configuration when the current demand ($i_{DEMAND}$) is greater than the total minimum current ($i_{MIN}$) and lower than the ejector 1 maximum current ($i_{MAX\_01}$).

In one embodiment, when the fuel supply pressure (Pcv) is lower than the fuel supply pressure threshold ($P_{CV\_THV}$), and the fuel supply pressure (Pcv) is such that the ejector 1 maximum current ($i_{MAX\_01}$) is lower than about 1.1 times the total minimum current ($i_{MIN}$), and the ejector 1 maximum current ($i_{MAX\_01}$) is greater than the ejector 2 minimum current ($i_{MIN\_02}$). In some embodiments, the system **500/502/600/602** may operate in a solo configuration using ejector 1 **230** when the current demand ($i_{DEMAND}$) is lower than the ejector 2 minimum current ($i_{MIN\_02}$). In some embodiments, the system **500/502/600/602** may transition to a solo configuration using ejector 2 **530/630** when the current demand ($i_{DEMAND}$) is lower than about 0.95 times the ejector 1 maximum current ($i_{MAX\_01}$) and greater than the ejector 2 minimum current ($i_{MIN\_02}$). In some embodiments, the system **500/502/600/602** may transition from a solo configuration using ejector 2 **530/630** to a dual configuration when the current demand ($i_{DEMAND}$) is lower than about 0.95 times the ejector 2 maximum current ($i_{MAX\_02}$) and greater than the total minimum current ($i_{MIN}$).

In one embodiment, the system **500/502/600/602** may have one or more static transition points when the system **500/502/600/602** may switch from one configuration to another. In some embodiments, a static transition point for the system **500/502/600/602** may be when the fuel supply pressure ($P_{CV}$) is lower than the fuel supply pressure threshold ($P_{CV\_THV}$). In some embodiments, a static transition point for the system **500/502/600/602** may be independent of the fuel supply pressure (Pcv).

In one embodiments, the system **500/502/600/602** may operate in solo configuration using ejector 1 **230** when the current demand ($i_{DEMAND}$) is lower than the ejector 2 minimum current ($i_{MIN\_02}$), independent of the fuel supply pressure ($P_{CV}$). In other embodiments, the system **500/502/600/602** may transition to a solo configuration using ejector 2 **530/630** when the current demand ($i_{DEMAND}$) is lower than about 0.95 times the ejector 1 maximum current ($i_{MAX\_01}$) and greater than the ejector 2 minimum current ($i_{MIN\_02}$), independent of the fuel supply pressure ($P_{CV}$). In some embodiments, the system **500/502/600/602** may transition from a solo configuration using ejector 2 **530/630** to a dual configuration when the current demand ($i_{DEMAND}$) is lower than about 0.95 times the ejector 2 maximum current ($i_{MAX\_02}$) and greater than the total minimum current ($i_{MIN}$), independent of the fuel supply pressure (Pcv).

In one embodiments, when the system **500/502/600/602** may have one or more static transition points, the ejector 1 maximum current ($i_{MAX\_01}$) and/or the ejector 2 maximum current ($i_{MAX\_02}$) may be the actual current density values at a given fuel supply pressure ($P_{CV}$) or may be the current density values determined/evaluated/calculated at a certain fuel supply pressure ($P_{CV}$) such that the minimum control valve inlet pressure ($P_{CV\_MIN}$), the total minimum current ($i_{MIN}$) and/or the ejector 2 minimum current ($i_{MIN\_02}$) are sensitive to $\sqrt{T_O/T_{O\_MAX}}$. In some embodiments, the anode inlet manifold pressure ($P_{AIM}$) may impact the ejector 1 minimum current ($i_{MIN\_01}$) and/or ejector 2 minimum current ($i_{MIN\_02}$).

In one embodiment, one or more virtual or physical sensors may be used to estimate or determine the fuel supply pressure ($P_{CV}$). In some embodiments, the estimated or measured value of the fuel supply pressure ($P_{CV}$) may be correlated to the primary inlet temperature ($T_O$). In one embodiments, Schmidt trigger approach may be used to determine transitioning the system **500/502/600/602** from one ejector configuration to another. In some embodiments, using the Schmidt trigger approach may avoid oscillations between the different ejector configuration states. In other embodiments, a dashboard light may be set to fill the fuel supply tank when needing to transition between the different ejector configuration states. In some embodiments, the fuel supply pressure ($P_{CV}$) and/or the fuel supply pressure threshold ($P_{CV\_THV}$) may be correlated to $\sqrt{T_O/T_{O\_MAX}}$.

In one embodiment, the sizing of ejector 1 **230** may be optimized for the lower flow condition when using static transition points. In some embodiments, the mixer area ratio (MAR) may be set to handle the primary flow 202 and the secondary flow **226** flow at up to and including conditions when the current density in ejector 1 **230** is the max current density in ejector 1 **230** ($i_{MAX\_1}$) under minimum control valve inlet pressure ($P_{CV\_MIN}$) conditions. In some embodiments, minimum control valve inlet pressure ($P_{CV\_MIN}$) may be about 14 bara. In other embodiments, ejector 1 **230** may be more robust to the pressure lift ($\Delta P_{LIFT}$). For example, a smaller mixer area ratio (MAR) may be needed because of limited recirculation flow. In some embodiments, a smaller recirculation flow may allow for higher pressure lift ($\Delta P_{LIFT}$), all else being equal.

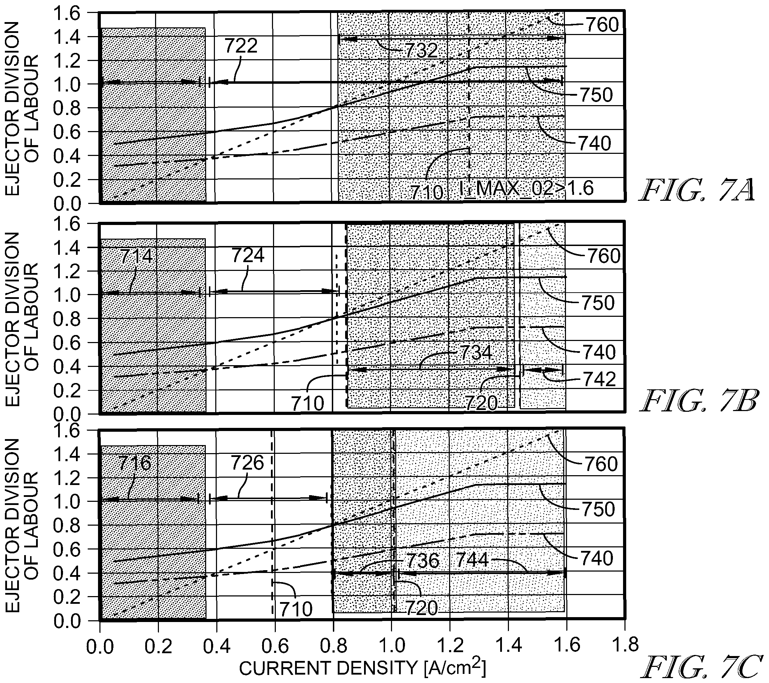

In one embodiment, as shown in **FIG. 7A,** if the fuel supply pressure (Pcv) is about 30 bara, the ejector 1 maximum current ($i_{MAX\_01}$) **710** may be about 1.25 Amps/ cm$^2$, and the ejector 2 maximum current ($i_{MAX\_02}$) **720** may be greater than about 1.6 Amps/cm$^2$. In some embodiments, the system **530/630** may operate in a solo configuration using ejector 1 **230** at a current demand ($i_{DEMAND}$) when the ejector 2 minimum current ($i_{MIN\_02}$) **740** is greater than the curve **760** (region **712**). In other embodiments, the system **530/630** may operate in a solo configuration using ejector 2 **530/630** at a current demand ($i_{DEMAND}$) when the ejector 2 minimum current ($i_{MIN\_02}$) **740** is lower than the curve **760** (region **722**). In some other embodiments, the system **530/630** may operate in a dual configuration using ejector 1 **230** and ejector 2 **530/630** at a current demand ($i_{DEMAND}$) when the total minimum current total ($i_{MIN}$) **750** is lower than the curve **760** (region **732**).

In one embodiment, as shown in **FIG. 7B,** if the fuel supply pressure (Pcv) is about 20 bara, the ejector 1 maximum current ($i_{MAX\_01}$) **710** may be about 0.85 Amps/ cm$^2$, and the ejector 2 maximum current ($i_{MAX\_02}$) **720** may be about 1.45 Amps/ cm$^2$. In some embodiment, the system **530/630** may operate in a solo configuration using ejector 1 **230** at a current demand ($i_{DEMAND}$) when the ejector 2 minimum current ($i_{MIN\_02}$) **740** is greater than the curve **760** (region **714**). In some embodiments, the system **530/630** may operate in a solo configuration using ejector 2 **530/630** at a current demand ($i_{DEMAND}$) when the ejector 2 minimum current ($i_{MIN\_02}$) **740** is lower than the curve **760** and the total minimum current total ($i_{MIN}$) **750** is greater than the curve **760** (region **724**). In other embodiments, the system **530/630** may operate in a dual configuration using ejector 1 **230** and ejector 2 **530/630** at a current demand ($i_{DEMAND}$) that is greater than the ejector 1 maximum current ($i_{MAX\_01}$) **710** and lower than the ejector 2 maximum current ($i_{MAX\_02}$) **720** (region **734**). In some other embodiments, the system **530/630** may be required to operate in a dual configuration using ejector 1 **230** and ejector 2 **530/630** at a current demand ($i_{DEMAND}$) that is greater than the ejector 2 maximum current ($i_{MAX\_02}$) **720** (region **742**).

In one embodiment, as shown in **FIG. 7C,** if the fuel supply pressure (Pcv) is equal to the minimum control valve inlet pressure ($P_{CV\_MIN}$), at about 14 bara, the ejector 1 maximum current ($i_{MAX\_01}$) **710** may be about 0.6 Amps/ cm$^2$, and the ejector 2 maximum current ($i_{MAX\_02}$) **720** may be about 1 Amps/ cm$^2$. In some embodiments, system **530/630** may operate in a solo configuration using ejector 1 **230** at a current demand ($i_{DEMAND}$) when the ejector 2 minimum current ($i_{MIN\_02}$) **740** is greater than the curve **760** and when the current demand ($i_{DEMAND}$) is lower than the ejector 1 maximum current ($i_{MAX\_01}$) **710** (region **716**). In other embodiments, the system **530/630** may operate in a solo configuration using ejector 2 **530/630** at a current demand ($i_{DEMAND}$) when the ejector 2 minimum current ($i_{MIN\_02}$) **740** is lower than the curve **760** and the total minimum current total ($i_{MIN}$) **750** is greater than the curve **760** (region **726**).

In one embodiment, the system **530/630** may operate in a dual configuration using ejector 1 **230** and ejector 2 **530/630** at a current demand ($i_{DEMAND}$) that is greater than the ejector 1 maximum current ($i_{MAX\_01}$) **710** and lower than the ejector 2 maximum current ($i_{MAX\_02}$) **720** and when the total minimum current total ($i_{MIN}$) **750** is lower than the curve **760** (region **736**). In some other embodiments, the system **530/630** may be required to operate in a dual configuration using ejector 1 **230** and ejector 2 **530/630** at a current demand ($i_{DEMAND}$) that is greater than the ejector 2 maximum current ($i_{MAX\_02}$) **720** (region **744**). In some embodiments, if the total minimum current ($i_{MIN}$) **750** is less than the curve **760,** the nozzles may be choked when both ejector 1 **230** and ejector 2 **530/630** are enabled. In some other embodiments, if the ejector 2 minimum current ($i_{MIN\_02}$) **740** is lower than the curve **760,** the nozzles may be choked when the system **500/600** is in a solo configuration using ejector 2 **530/630**.

The following numbered embodiments are contemplated and are nonlimiting:

1. A fuel cell stack system comprising an operating current density range comprising a lowest operating current density and a highest operating current density, a primary fuel flowing through a control valve, a first ejector comprising the first primary fuel, a first entrained fuel, a first mixer area ratio, a first maximum current density, a first minimum current density, and a first turn down ratio, and a second ejector in parallel or in series to the first ejector, comprising a second primary fuel, a second entrained fuel, a second mixer area ratio, a second maximum current density, a second minimum current density, and a second turn down ratio.

2. The fuel cell stack system of clause 1, any other suitable clause, or any combination of suitable clauses, wherein the system further comprises a blower in a series or parallel configuration to the first or the second ejector.

3. The fuel cell stack system of clause 1, any other suitable clause, or any combination of suitable clauses, wherein the first turn down ratio is from about 1.5 to about 8, or the second turn down ratio is in a range from about 1.5 to about 8, wherein the first turn down ratio is the same as the second turn down ratio.

4. The fuel cell stack system of clause 1, any other suitable clause, or any combination of suitable clauses, wherein the first turn down ratio is different from the second turn down ratio.

5. The fuel cell stack system of clause 1, any other suitable clause, or any combination of suitable clauses, wherein the first primary fuel flows through a first primary nozzle in the first ejector and the second primary fuel flows through a second primary nozzle in the second ejector, wherein first turn down ratio is 2 and the second turn down ratio is 2, and wherein the ratio of the first primary nozzle to the second primary nozzle is 2:1.

6. The fuel cell stack system of clause 1, any other suitable clause, or any combination of suitable clauses, wherein the first ejector is sized to provide an entrainment ratio at the lowest operating current density of the system up to a first current density and the second ejector is sized to provide the entrainment ratio above the first current density and up to the highest operating current density.

7. The fuel cell stack system of clause 1, any other suitable clause, or any combination of suitable clauses, wherein the system further comprises a by-pass valve downstream of the control valve and wherein the by-pass valve accounts for an entrainment ratio above a by-pass valve current density and up to the highest operating current density.

8. The fuel cell stack system of clause 7, any other suitable clause, or any combination of suitable clauses, wherein the first ejector is sized to provide the entrainment ratio at the lowest operating current density of the system up to a first current density, and the second ejector is sized to provide the entrainment ratio above the first current density and up to the by-pass valve current density.

9. The fuel cell stack system of clause 7, any other suitable clause, or any combination of suitable clauses, wherein the first primary fuel flows through a first primary nozzle in the first ejector and the second primary fuel flows through a second primary nozzle in the second ejector, wherein the first turn down ratio is 2 and the second turn down ratio is 2, wherein the ratio of the first primary nozzle to the second primary nozzle is 2:1, and wherein the first ejector and the second ejector together account for the entrainment ratio up to the by-pass valve current density.

10. The fuel cell stack system of clause 8, any other suitable clause, or any combination of suitable clauses, wherein the first primary fuel flows through a first primary nozzle in the first ejector and the second primary fuel flows through a second primary nozzle in the second ejector, the first turn down ratio is 2 and the second turn down ratio is 2, and wherein the ratio of the first primary nozzle to the second primary nozzle is 2:1.

11. The fuel cell stack system of clause 1, any other suitable clause, or any combination of suitable clauses, wherein the first mixer area ratio of the first ejector is different from the second mixer area ratio of the second ejector.

12. The fuel cell stack system of clause 1, any other suitable clause, or any combination of suitable clauses, wherein the first ejector and the second ejector are sized based on a minimum fuel supply pressure for both the first ejector and the second ejector or the turn down ratio of the first ejector and the second ejector.

13. The fuel cell stack system of clause 1, any other suitable clause, or any combination of suitable clauses, wherein the first ejector or the second ejector are sized to operate at the lowest operating current of the system.

14. The fuel cell stack system of clause 1, any other suitable clause, or any combination of suitable clauses, wherein the system operates only the first ejector if the first maximum current density of the first ejector is greater than a maximum operating current density of the system, and wherein the first mixer area ratio of the first ejector is sized to not geometrically constrain a required entrainment ratio.

15. The fuel cell stack system of clause 1, any other suitable clause, or any combination of suitable clauses, wherein the system operates the first ejector or the second ejector if the first maximum current density of the first ejector is lower than a maximum operating current density of the system.

16. The fuel cell stack system of clause 15, any other suitable clause, or any combination of suitable clauses, wherein the system operates the second ejector if current demand is equal to or more than the second minimum current density.

17. The fuel cell stack system of clause 15, any other suitable clause, or any combination of suitable clauses, wherein the system operates the second ejector before current demand is equal to the first maximum current density of the first ejector.

18. The fuel cell stack system of clause 15, any other suitable clause, or any combination of suitable clauses, wherein the system operates the first ejector and the second ejector before current demand is equal to the second maximum current density of the first ejector.

19. The fuel cell stack system of clause 1, any other suitable clause, or any combination of suitable clauses, wherein the system does not operate both the first ejector and the second ejector before current demand is equal to the sum of the first minimum current density of the first ejector and the second minimum current density of the second ejector.

20. The fuel cell stack system of clause 1, any other suitable clause, or any combination of suitable clauses, wherein the system includes two to four ejectors is series with each other or in parallel to each other.

21. The fuel cell stack system of clause 1, any other suitable clause, or any combination of suitable clauses, wherein the system includes more than four ejectors is series with each other or in parallel to each other.

22. The fuel cell stack system of clause 1, any other suitable clause, or any combination of suitable clauses, wherein the first ejector is the same size as the second ejector.

23. The fuel cell stack system of clause 1, any other suitable clause, or any combination of suitable clauses, wherein the first ejector and the second ejector are sized be sized differently to retain their overall efficiency or performance.

24. The fuel cell stack system of clause 1, any other suitable clause, or any combination of suitable clauses, wherein the size of the first ejector and the second ejector include, but are is not limited to measurements related to primary nozzle flow area, internal mixer area, mixer length, suction chamber design, diffuser expansion angle and diffusion expansion length.

25. The fuel cell stack system of clause 1, any other suitable clause, or any combination of suitable clauses, wherein the system has more than on by-pass valves across more than one ejectors, or downstream of a control valve, or upstream of a control valve.

26. The fuel cell stack system of clause 25, any other suitable clause, or any combination of suitable clauses, wherein the control valve is a mechanical regulator, a dome regulated mechanical regulator, a proportional control valve, or an injector.

27. The fuel cell stack system of clause 1, any other suitable clause, or any combination of suitable clauses, wherein the system includes pressure losses associated with the first entrained flow or the second entrained flow.

28. The fuel cell stack system of clause 1, any other suitable clause, or any combination of suitable clauses, wherein the first ejector or the second ejector works against the entire pressure lift ($\Delta P_{LIFT}$) of the system.

29. The fuel cell stack system of clause 28, any other suitable clause, or any combination of suitable clauses, wherein the first ejector or the second ejector is required to only lift the flow associated with the flow through a first primary nozzle or a second primary nozzle respectively.

30. The fuel cell stack system of clause 1, any other suitable clause, or any combination of suitable clauses, wherein one or more valves regulating flow to the first ejector and the second ejector open and/or close to direct the first primary flow to the first ejector and the second ejector.

31. The fuel cell stack system of clause 1, any other suitable clause, or any combination of suitable clauses, wherein a total primary flow is equal to the sum of the first primary flow and the second primary flow.

32. The fuel cell stack system of clause 31, any other suitable clause, or any combination of suitable clauses, wherein the total primary flow is equally divided between the first primary flow and the second primary flow.

33. The fuel cell stack system of clause 31, any other suitable clause, or any combination of suitable clauses, wherein the total primary flow is unequally divided between the first primary flow and the second primary flow.

34. The fuel cell stack system of clause 1, any other suitable clause, or any combination of suitable clauses, wherein a total entrained flow is equal to the sum of the first entrained flow and the second entrained flow.

35. The fuel cell stack system of clause 34, any other suitable clause, or any combination of suitable clauses, wherein the total entrained flow is equally divided between the first entrained flow and the second entrained flow.

36. The fuel cell stack system of clause 34, any other suitable clause, or any combination of suitable clauses, wherein the total entrained flow is unequally divided between the first entrained flow and the second entrained flow.

37. The fuel cell stack system of clause 1, any other suitable clause, or any combination of suitable clauses, wherein the first entrained flow or the second entrained flow are regulated by check valves to prevent reverse flow.

38. The fuel cell stack system of clause 1, any other suitable clause, or any combination of suitable clauses, wherein the system achieves a target entrainment ratio (ER) without requiring a blower and reducing parasitic loads.

39. The fuel cell stack system of clause 1, any other suitable clause, or any combination of suitable clauses, wherein the ejector is sized to fully deliver a recirculation without the assistance of a blower.

40. The fuel cell stack system of clause 1, any other suitable clause, or any combination of suitable clauses, wherein the first ejector and the second ejector are regulated by one valve.

41. The fuel cell stack system of clause 1, any other suitable clause, or any combination of suitable clauses, wherein the system engages the first ejector or the second ejector.

42. The fuel cell stack system of clause 1, any other suitable clause, or any combination of suitable clauses, wherein properties of the first entrained flow are different from the properties of the second entrained flow.

43. The fuel cell stack system of clause 1, any other suitable clause, or any combination of suitable clauses, wherein the first entrained flow is drier or less dry than the second entrained flow.

44. The fuel cell stack system of clause 1, any other suitable clause, or any combination of suitable clauses, wherein the first ejector or the second ejector is sensitive to the anode inlet manifold pressure ($P_{AIM}$) and/or the fuel supply pressure (Pcv) of the system.

45. The fuel cell stack system of clause 1, any other suitable clause, or any combination of suitable clauses, wherein the first mixer area ratio is different than the second mixer area ratio.

46. The fuel cell stack system of clause 1, any other suitable clause, or any combination of suitable clauses, wherein the first mixer area ratio or the second mixer area ratio is a critical parameter that influences entrainment ratio (ER) vs pressure lift ($\Delta P_{LIFT}$) capability of the system.

47. The fuel cell stack system of clause 1, any other suitable clause, or any combination of suitable clauses, wherein a ratio of a first primary nozzle of the first ejector to a second primary nozzle of the second ejector is equal to the ratio of an inlet diameter of the first primary nozzle to an inlet diameter of the of the second primary nozzle or is equal to the ratio of an outlet diameter of the first primary nozzle to an outlet diameter of the of the second primary nozzle.

48. The fuel cell stack system of clause 1, any other suitable clause, or any combination of suitable clauses, wherein a ratio of a first primary nozzle of the first ejector to a second primary nozzle of the second ejector is equal to the ratio of an inlet area of the first primary nozzle to an inlet area of the of the second primary nozzle.

49. The fuel cell stack system of clause 1, any other suitable clause, or any combination of suitable clauses, wherein the first ejector or the second ejector are sized according to the minimum fuel supply pressure ($P_{\_CV\_MIN}$) for both the first ejector and the second ejector.

50. The fuel cell stack system of clause 1, any other suitable clause, or any combination of suitable clauses, wherein the first ejector or the second ejector are sized according to first turn down ratio or the second turn down ratio.

51. The fuel cell stack system of clause 1, any other suitable clause, or any combination of suitable clauses, wherein the first ejector or the second ejector are sized to cover different ratios of the operating range of the system.

52. The fuel cell stack system of clause 1, any other suitable clause, or any combination of suitable clauses, wherein the first ejector is sized to provide a full entrained flow requirement at an excess fuel ratio current density threshold ($i_{\_\lambda\_THV}$).

53. The fuel cell stack system of clause 52, any other suitable clause, or any combination of suitable clauses, wherein a primary nozzle inlet pressure ($P_O\_i_{\_\lambda\_THV}$) is:

$$P_O\_i_{\_\lambda\_THV} = P_{AIM}\_i_{\_\lambda\_THV} \times pr_{\_CR}$$

54. The fuel cell stack system of clause 1, any other suitable clause, or any combination of suitable clauses, wherein a total effective flow area of a primary nozzle of the first ejector or the second ejector is based on a maximum current at purge ($i_{MAX\_P}$) and a fuel sizing pressure ($P_{\_CV\_MIN}$).

55. The fuel cell stack system of clause 1, any other suitable clause, or any combination of suitable clauses, wherein pressure operating curves of the system influence a division of labor and switching between solo use and dual use of the first ejector and the second ejector.

56. The fuel cell stack system of clause 1, any other suitable clause, or any combination of suitable clauses, wherein a first ejector maximum current ($i_{\_MAX\_01}$) is a maximum current that the first ejector can support on its own at a given fuel supply pressure ($P_{CV}$) and primary inlet temperature ($T_O$).

57. The fuel cell stack system of clause 1, any other suitable clause, or any combination of suitable clauses, wherein a second ejector minimum current ($i_{\_MIN\_02}$) is a minimum current that the second ejector can support to keep the second ejector choked.

58. A method of operating a fuel cell stack system comprising:

flowing a first primary fuel through a control valve and a first ejector,
flowing a first entrained fuel through the first ejector,
flowing a second primary fuel through the control valve and a second ejector which is in parallel or in series to the first ejector,
flowing a second entrained fuel through the second ejector, and
operating the first or the second ejector,
wherein the first ejector comprises a first maximum current density, a first turn

down ratio, a first mixer area ratio, and a first minimum current density, wherein the second ejector comprises a second maximum current density, a second turn down ratio, a second mixer area ratio, and a second minimum current density, and wherein the system comprises an operating current density range comprising a lowest operating current density and a highest operating current density.

59. The method of clause 58, any other suitable clause, or any combination of suitable clauses, wherein the system further comprises a blower in a series or parallel configuration to the first or the second ejector.

60. The method of clause 58, any other suitable clause, or any combination of suitable clauses, wherein the first turn down ratio is from about 1.5 to about 8, or the second turn down ratio is in a range from about 1.5 to about 8, wherein the first turn down ratio is the same as the second turn down ratio.

61. The method of clause 58, any other suitable clause, or any combination of suitable clauses, wherein the first turn down ratio is different from the second turn down ratio.

62. The method of clause 58, any other suitable clause, or any combination of suitable clauses, wherein the first primary fuel flows through a first primary nozzle in the first ejector and the second primary fuel flows through a second primary nozzle in the second ejector, wherein first turn down ratio is 2 and the second turn down ratio is 2, and wherein the ratio of the first primary nozzle to the second primary nozzle is 2:1.

63. The method of clause 58, any other suitable clause, or any combination of suitable clauses, wherein the first ejector is sized to provide an entrainment ratio at the lowest operating current density of the system up to a first current density and the second ejector is sized to provide the entrainment ratio above the first current density and up to the highest operating current density.

64. The method of clause 58, any other suitable clause, or any combination of suitable clauses, wherein the system further comprises a by-pass valve downstream of the control valve and wherein the by-pass valve accounts for an entrainment ratio above a by-pass valve current density and up to the highest operating current density.

65. The method of clause 64, any other suitable clause, or any combination of suitable clauses, wherein the first ejector is sized to provide the entrainment ratio at the lowest operating current density of the system up to a first current density, and the second ejector is sized to provide the entrainment ratio above the first current density and up to the by-pass valve current density.

66. The method of clause 64, any other suitable clause, or any combination of suitable clauses, wherein the first primary fuel flows through a first primary nozzle in the first ejector and the second primary fuel flows through a second primary nozzle in the second ejector, wherein the first turn down ratio is 2 and the second turn down ratio is 2, wherein the ratio of the first primary nozzle to the second primary nozzle is 2:1, and wherein the first ejector and the second ejector together account for the entrainment ratio up to the by-pass valve current density.

67. The method of clause 65, any other suitable clause, or any combination of suitable clauses, wherein the first primary fuel flows through a first primary nozzle in the first ejector and the second primary fuel flows through a second primary nozzle in the second ejector, the first turn down ratio is 2 and the second turn down ratio is 2, and wherein the ratio of the first primary nozzle to the second primary nozzle is 2:1.

68. The method of clause 58, any other suitable clause, or any combination of suitable clauses, wherein the first mixer area ratio of the first ejector is different from the second mixer area ratio of the second ejector.

69. The method of clause 58, any other suitable clause, or any combination of suitable clauses, wherein the first ejector and the second ejector are sized based on a minimum fuel supply pressure for both the first ejector and the second ejector or the turn down ratio of the first ejector and the second ejector.

70. The method of clause 58, any other suitable clause, or any combination of suitable clauses, wherein the first ejector or the second ejector are sized to operate at the lowest operating current of the system.

71. The method of clause 58, any other suitable clause, or any combination of suitable clauses, wherein the system operates only the first ejector if the first maximum current density of the first ejector is greater than a maximum operating current density of the system, and wherein the first mixer area ratio of the first ejector is sized to not geometrically constrain a required entrainment ratio.

72. The method of clause 58, any other suitable clause, or any combination of suitable clauses, wherein the system operates the first ejector or the second ejector if the first maximum current density of the first ejector is lower than a maximum operating current density of the system.

73. The method of clause 58, any other suitable clause, or any combination of suitable clauses, wherein the system operates the second ejector if current demand is equal to or more than the second minimum current density.

74. The method of clause 58, any other suitable clause, or any combination of suitable clauses, wherein the system operates the second ejector before current demand is equal to the first maximum current density of the first ejector.

75. The method of clause 58, any other suitable clause, or any combination of suitable clauses, wherein the system operates the first ejector and the second ejector before current demand is equal to the second maximum current density of the first ejector.

76. The method of clause 58, any other suitable clause, or any combination of suitable clauses, wherein the system does not operate both the first ejector and the second ejector before current demand is equal to the sum of the first minimum current density of the first ejector and the second minimum current density of the second ejector.

77. The method of clause 58, any other suitable clause, or any combination of suitable clauses, wherein the system includes two to four ejectors is series with each other or in parallel to each other.

78. The method of clause 58, any other suitable clause, or any combination of suitable clauses, wherein the system includes more than four ejectors is series with each other or in parallel to each other.

79. The method of clause 58, any other suitable clause, or any combination of suitable clauses, wherein first ejector is the same size as the second ejector.

80. The method of clause 58, any other suitable clause, or any combination of suitable clauses, wherein the first ejector and the second ejector are sized be sized differently to retain their overall efficiency or performance.

81. The method of clause 58, any other suitable clause, or any combination of suitable clauses, wherein the size of the first ejector and the second ejector include, but are is not limited to measurements related to primary nozzle flow area, internal mixer area, mixer length, suction chamber design, diffuser expansion angle and diffusion expansion length.

82. The method of clause 58, any other suitable clause, or any combination of suitable clauses, wherein the system has more than on by-pass valves across more than one ejectors, or downstream of a control valve, or upstream of a control valve.

83. The method of clause 82, any other suitable clause, or any combination of suitable clauses, wherein the control valve is a mechanical regulator, a dome regulated mechanical regulator, a proportional control valve, or an injector.

84. The method of clause 58, any other suitable clause, or any combination of suitable clauses, wherein the system includes pressure losses associated with the first entrained flow or the second entrained flow.

85. The method of clause 58, any other suitable clause, or any combination of suitable clauses, wherein the first ejector or the second ejector works against the entire pressure lift ($\Delta P_{LIFT}$) of the system.

86. The method of clause 85, any other suitable clause, or any combination of suitable clauses, wherein the first ejector or the second ejector is required to only lift the flow associated with the flow through a first primary nozzle or a second primary nozzle respectively.

87. The method of clause 58, any other suitable clause, or any combination of suitable clauses, wherein one or more valves regulating flow to the first ejector and the second ejector open and/or close to direct the first primary flow to the first ejector and the second ejector.

88. The method of clause 58, any other suitable clause, or any combination of suitable clauses, wherein a total primary flow is equal to the sum of the first primary flow and the second primary flow.

89. The method of clause 88, any other suitable clause, or any combination of suitable clauses, wherein the total primary flow is equally divided between the first primary flow and the second primary flow.

90. The method of clause 88, any other suitable clause, or any combination of suitable clauses, wherein the total primary flow is unequally divided between the first primary flow and the second primary flow.

91. The method of clause 58, any other suitable clause, or any combination of suitable clauses, wherein a total entrained flow is equal to the sum of the first entrained flow and the second entrained flow.

92. The method of clause 91, any other suitable clause, or any combination of suitable clauses, wherein the total entrained flow is equally divided between the first entrained flow and the second entrained flow.

93. The method of clause 91, any other suitable clause, or any combination of suitable clauses, wherein the total entrained flow is unequally divided between the first entrained flow and the second entrained flow.

94. The method of clause 58, any other suitable clause, or any combination of suitable clauses, wherein the first entrained flow or the second entrained flow are regulated by check valves to prevent reverse flow.

95. The method of clause 58, any other suitable clause, or any combination of suitable clauses, wherein the system achieves a target entrainment ratio (ER) without requiring a blower and reducing parasitic loads.

96. The method of clause 58, any other suitable clause, or any combination of suitable clauses, wherein the ejector is sized to fully deliver a recirculation without the assistance of a blower.

97. The method of clause 58, any other suitable clause, or any combination of suitable clauses, wherein the first ejector and the second ejector are regulated by one valve.

98. The method of clause 58, any other suitable clause, or any combination of suitable clauses, wherein the system engages the first ejector or the second ejector.

99. The method of clause 58, any other suitable clause, or any combination of suitable clauses, wherein properties of the first entrained flow are different from the properties of the second entrained flow.

100. The method of clause 58, any other suitable clause, or any combination of suitable clauses, wherein the first entrained flow is drier or less dry than the second entrained flow.

101. The method of clause 58, any other suitable clause, or any combination of suitable clauses, wherein the first ejector or the second ejector is sensitive to the anode inlet manifold pressure ($P_{AIM}$) and/or the fuel supply pressure (Pcv) of the system.

102. The method of clause 58, any other suitable clause, or any combination of suitable clauses, wherein the first mixer area ratio is different than the second mixer area ratio.

103. The method of clause 58, any other suitable clause, or any combination of suitable clauses, wherein the first mixer area ratio or the second mixer area ratio is a critical parameter that influences entrainment ratio (ER) vs pressure lift ($\Delta P_{LIFT}$) capability of the system.

104. The method of clause 58, any other suitable clause, or any combination of suitable clauses, wherein a ratio of a first primary nozzle of the first ejector to a second primary nozzle of the second ejector is equal to the ratio of an inlet diameter of the first primary nozzle to an inlet diameter of the of the second primary nozzle or is equal to the ratio of an outlet diameter of the first primary nozzle to an outlet diameter of the of the second primary nozzle.

105. The method of clause 58, any other suitable clause, or any combination of suitable clauses, wherein a ratio of a first primary nozzle of the first ejector to a second primary nozzle of the second ejector is equal to the ratio of an inlet area of the first primary nozzle to an inlet area of the of the second primary nozzle.

106. The method of clause 58, any other suitable clause, or any combination of suitable clauses, wherein the first ejector or the second ejector are sized according to the minimum fuel supply pressure ($P_{\_CV\_MIN}$) for both the first ejector and the second ejector.

107. The method of clause 58, any other suitable clause, or any combination of suitable clauses, wherein the first ejector or the second ejector are sized according to first turn down ratio or the second turn down ratio.

108. The method of clause 58, any other suitable clause, or any combination of suitable clauses, wherein the first ejector or the second ejector are sized to cover different ratios of the operating range of the system.

109. The method of clause 58, any other suitable clause, or any combination of suitable clauses, wherein the first ejector is sized to provide a full entrained flow requirement at an excess fuel ratio current density threshold ($i_{\_\lambda\_THV}$).

110. The method of clause 109, any other suitable clause, or any combination of suitable clauses, wherein a primary nozzle inlet pressure ($P_{o\_i\_\lambda\_THV}$) is:

$$P_{O\_i\_\lambda\_THV} = P_{AIM\_i\_\lambda\_THV} \times pr_{\_CR}$$

111. The method of clause 58, any other suitable clause, or any combination of suitable clauses, wherein a total effective flow area of a primary nozzle of the first ejector or the second ejector is based on a maximum current at purge ($i_{MAx\_P}$) and a fuel sizing pressure ($P_{\_CV\_MIN}$).

112. The method of clause 58, any other suitable clause, or any combination of suitable clauses, wherein pressure operating curves of the system influence a division of labor and switching between solo use and dual use of the first ejector and the second ejector.

113. The method of clause 58, any other suitable clause, or any combination of suitable clauses, wherein a first ejector maximum current ($i_{\_MAX\_01}$) is a maximum current that the first ej ector can support on its own at a given fuel supply pressure ($P_{CV}$) and primary inlet temperature ($T_0$).

114. The method of clause 58, any other suitable clause, or any combination of suitable clauses, wherein a second ejector minimum current ($i_{\_MIN\_02}$) is a minimum current that the second ejector can support to keep the second ejector choked.

All embodiments are described in sufficient detail to enable those skilled in the art to practice what is claimed and it is to be understood that other embodiments may be utilized and that logical, mechanical, and electrical changes may be made without departing from the spirit and scope of the claims. The detailed description is, therefore, not to be taken in a limiting sense.

As used herein, an element or step recited in the singular and proceeded with the word "a" or "an" should be understood as not excluding plural of said elements or steps, unless such exclusion is explicitly stated.

Furthermore, references to "one embodiment" of the presently described subject matter are not intended to be interpreted as excluding the existence of additional embodiments that also incorporate the recited features. Specified numerical ranges of units, measurements, and/or values include, consist essentially or, or consist of all the numerical values, units, measurements, and/or ranges including or within those ranges and/or endpoints, whether those numerical values, units, measurements, and/or ranges are explicitly specified in the present disclosure or not.

Unless defined otherwise, technical and scientific terms used herein have the same meaning as is commonly understood by one of ordinary skill in the art to which this disclosure belongs. The terms "first", "second", "third", and the like, as used herein do not denote any order or importance, but rather are used to distinguish one element from another. The term "or" and "and/or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising", "including", or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps. The phrase "consisting of' or "consists of' refers to a compound, composition, formulation, or method that excludes the presence of any additional elements, components, or method steps.

The term "consisting of' also refers to a compound, composition, formulation, or method of the present disclosure that excludes the presence of any additional elements, components, or method steps. The phrase "consisting essentially of' or "consists essentially of' refers to a composition, compound, formulation, or method that is inclusive of additional elements, components, or method steps that do not materially affect the characteristic(s) of the composition, compound, formulation, or method. The phrase "consisting essentially of' also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about", and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

While only certain features of the invention have been illustrated and described herein, many modifications and changes will occur to those skilled in the art. It is, therefore, to be understood that the appended claims are intended to cover all such modifications and changes as fall within the true spirit of the invention.

**Claims**

1. A fuel cell or fuel stack system comprising:

   an operating current density range comprising a lowest operating current density and a highest operating current density,
   a primary fuel flowing through a control valve,
   a first ejector comprising the first primary fuel, a first entrained fuel, a first mixer area ratio, a first maximum current density, a first minimum current density, and a first turn down ratio, and
   a second ejector in parallel or in series to the first ejector, comprising a second primary fuel, a second entrained fuel, a second mixer area ratio, a second maximum current density, a second minimum current density, and a second turn down ratio.

2. The system of claim 1, wherein the system further comprises a blower in a series or parallel configuration to the first or the second ejector.

3. The system of claim 1 or 2, wherein the first turn down ratio is from about 1.5 to about 8, or the second turn down ratio is in a range from about 1.5 to about 8, wherein the first turn down ratio is the same as the second turn down ratio.

4. The system of claim 1 or 2, wherein the first turn down ratio is different from the second turn down ratio.

5. The system of claim 1, wherein the first primary fuel flows through a first primary nozzle in the first ejector and the second primary fuel flows through a second primary nozzle in the second ejector, wherein first turn down ratio is 2 and the second turn down ratio is 2, and wherein the ratio of the first primary nozzle to the second primary nozzle is 2:1.

6. The system of any preceding claim, wherein the first ejector is sized to provide an entrainment ratio at the lowest operating current density of the system up to a first current density and the second ejector is sized to provide the entrainment ratio above the first current density and up to the highest operating current density.

7. The system of claim 1, wherein the system further comprises a by-pass valve downstream of the control valve and wherein the by-pass valve accounts for an entrainment ratio above a by-pass valve current density and up to the highest operating current density.

8. The system of claim 7, wherein the first ejector is sized to provide the entrainment ratio at the lowest operating current density of the system up to a first current density, and the second ejector is sized to provide the entrainment ratio above the first current density and upto the by-pass valve current density.

**9.** The system of claim 7, wherein the first primary fuel flows through a first primary nozzle in the first ejector and the second primary fuel flows through a second primary nozzle in the second ejector, wherein the first turn down ratio is 2 and the second turn down ratio is 2, wherein the ratio of the first primary nozzle to the second primary nozzle is 2:1, and wherein the first ejector and the second ejector together account for the entrainment ratio up to the by-pass valve current density.

**10.** The system of claim 8, wherein the first primary fuel flows through a first primary nozzle in the first ejector and the second primary fuel flows through a second primary nozzle in the second ejector, the first turn down ratio is 2 and the second turn down ratio is 2, and wherein the ratio of the first primary nozzle to the second primary nozzle is 2:1.

**11.** The system of claim 1, wherein the first ejector and the second ejector are sized based on a minimum fuel supply pressure for both the first ejector and the second ejector or the turn down ratio of the first ejector and the second ejector.

**12.** The system of claim 1, wherein the first ejector or the second ejector are sized to operate at the lowest operating current of the system.

**13.** The system of claim 1, wherein the system operates only the first ejector if the first maximum current density of the first ejector is greater than a maximum operating current density of the system, and wherein the first mixer area ratio of the first ejector is sized to not geometrically constrain a required entrainment ratio.

**14.** The system of claim 1, wherein the system operates the first ejector or the second ejector if the first maximum current density of the first ejector is lower than a maximum operating current density of the system.

**15.** The system of claim 15, wherein the system operates the second ejector if current demand is equal to or more than the second minimum current density or wherein the system operates the second ejector before current demand is equal to the first maximum current density of the first ejector.

FIG. 1

*FIG. 2*

EP 4 109 606 A1

FIG. 3

EP 4 109 606 A1

*FIG. 4A*

FIG. 4B

EP 4 109 606 A1

FIG. 5A

FIG. 5B

FIG. 6A

FIG. 6B

EP 4 109 606 A1

FIG. 7A

FIG. 7B

FIG. 7C

CURRENT DENSITY [A/cm²]

EJECTOR DIVISION OF LABOUR

EP 4 109 606 A1

Europäisches
Patentamt

European
Patent Office

Office européen
des brevets

# EUROPEAN SEARCH REPORT

Application Number

EP 22 16 8711

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/022171 A1 (SAITO KATUMI [JP] ET AL) 21 February 2002 (2002-02-21) | 1,6-8, 11-15 | INV. H01M8/04089 |
| Y | * paragraphs [0031] - [0041]; figure 1 * <br> * paragraphs [0075] - [0086] * <br> * paragraphs [0066], [0070], [0073] * | 3-5,9,10 | |
| X | US 2010/178591 A1 (LAMM ARNOLD [DE]) 15 July 2010 (2010-07-15) <br> * paragraphs [0019] - [0020]; figure 1 * | 1,2 | |
| X | WO 2008/092545 A1 (DAIMLER AG [DE]; FORD GLOBAL TECH LLC [US] ET AL.) 7 August 2008 (2008-08-07) | 1,6, 11-15 | |
| Y | * page 6, paragraph 2 - page 10, paragraph 1; figures 1, 3 * | 3-5,10 | |
| Y | US 2014/212776 A1 (OSBORNE KURT DAVID [US] ET AL) 31 July 2014 (2014-07-31) <br> * paragraphs [0017] - [0018] * | 3-5,9,10 | |

TECHNICAL FIELDS
SEARCHED    (IPC)

H01M

The present search report has been drawn up for all claims

| Place of search | Date of completion of the search | Examiner |
|---|---|---|
| Munich | 21 September 2022 | Goldbacher, Ute |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 16 8711**

This annex lists the patent family members relating to the patent documents cited in the above-mentioned European search report.
The members are as contained in the European Patent Office EDP file on
The European Patent Office is in no way liable for these particulars which are merely given for the purpose of information.

**21-09-2022**

| Patent document cited in search report | | Publication date | Patent family member(s) | | Publication date |
|---|---|---|---|---|---|
| US 2002022171 | A1 | 21-02-2002 | JP | 4679701 B2 | 27-04-2011 |
| | | | JP | 2002056870 A | 22-02-2002 |
| | | | US | 2002022171 A1 | 21-02-2002 |
| US 2010178591 | A1 | 15-07-2010 | DE | 102006037799 A1 | 20-03-2008 |
| | | | US | 2010178591 A1 | 15-07-2010 |
| | | | WO | 2008019771 A1 | 21-02-2008 |
| WO 2008092545 | A1 | 07-08-2008 | DE | 102007004590 A1 | 31-07-2008 |
| | | | WO | 2008092545 A1 | 07-08-2008 |
| US 2014212776 | A1 | 31-07-2014 | CN | 203910914 U | 29-10-2014 |
| | | | US | 2014212776 A1 | 31-07-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63215089